# EUROPEAN PATENT APPLICATION

(11) **EP 3 518 035 A1**
(43) Date of publication of application: **31.07.2019**
(21) Application number: 17853182.8
(22) Date of filing: 22.09.2017
(51) Int. Cl.: G03B 21/60, G02B 27/48, G02F 1/167, G03B 21/14, G03B 21/62, H04N 5/74, G02F 1/13

(54) **SCREEN AND DISPLAY DEVICE**

(30) Priority: 23.09.2016 JP 2016186024; 21.10.2016 JP 2016207137; 27.04.2017 JP 2017088937
(71) Applicant: Dai Nippon Printing Co., Ltd., Tokyo 162-8001 (JP)
(72) Inventor: KUBOTA Shogo, Tokyo 162-8001 (JP); KURASHIGE Makio, Tokyo 162-8001 (JP); NAKATSUGAWA Kaori, Tokyo 162-8001 (JP); ISHIDA Kazutoshi, Tokyo 162-8001 (JP)
(74) Representative: Müller-Boré & Partner Patentanwälte PartG mbB
(86) International application number: PCT/JP2017/034379
(87) International publication number: WO 2018/056414

(57) **Abstract**

A screen 40 includes a sheet member including a control layer that includes a plurality of particles or a predetermined liquid, and an electrode that applies a voltage to the control layer to drive the plurality of particles or the predetermined liquid. The plurality of particles or the predetermined liquid allows light emitted from a coherent light source 21 disposed at a predetermined site to be transmitted or reflected, and the electrode causes at least one of movement and rotation of the plurality of particles to occur at the inside of the control layer in correspondence with the voltage, or causes the predetermined liquid to move at the inside of the control layer in correspondence with the voltage.

## Description

### Technical Field

The present disclosure relates to a screen and a display device which display an image.

### Background Art

As disclosed in JP 2008-310260 A, a projector using a coherent light source has been used. As coherent light, typically, laser light that is oscillated from a laser light source can be used. In a case where image light from the projector is formed by the coherent light, speckles are observed on a screen that is irradiated with the image light. The speckles are recognized as a spot pattern, and deteriorate display image quality.

### Summary of Invention

JP 2008-310260 A suggests a screen that is constituted by a microcapsule-type electrophoresis electronic paper. In the screen suggested in JP 2008-310260 A, a reflectance varies in correspondence with an irradiation position of image light that is emitted by a Raster scanning method.

JP 2008-310260 A does not disclose a technology of reducing speckles which occur on the screen. To reduce the speckles which occur on the screen, it is effective to allow a diffusion wave surface to vary with the passage of time while maintaining diffusion characteristics of the screen. A method of directly vibrating the screen or the like has been suggested, but there is a great restriction in practical use.

Purposes of displaying an image on the screen are various, and thus it is necessary to install the screen at a location corresponding to each of the purposes. For example, in a case of displaying the screen as an advertisement medium, it is preferable that the screen is installed at a location that attracts an attention of many peoples, but an installation location and a size of the screen, and the like may be limited depending on a structure inside a building, or the like. In addition, a shape, a size, and an installation location of the screen may be determined from the viewpoints of design properties.

The present disclosure has been made in consideration such circumstances, and an object thereof is to provide a screen and a display device which are capable of reducing speckles even when variously changing an installation location, a shape, and a size of the screen.

To solve the problem, according to an aspect of the present disclosure, there is provided a screen including: a sheet member including a control layer that includes a plurality of particles or a predetermined liquid; and an electrode that applies a voltage to the control layer to drive the plurality of particles or the predetermined liquid,
in which the plurality of particles or the predetermined liquid allows light emitted from a light source disposed at a predetermined site to be transmitted or reflected, and
the electrode causes at least one of movement and rotation of the plurality of particles to occur at the inside of the control layer in correspondence with the voltage, or causes the predetermined liquid to move at the inside of the control layer in correspondence with the voltage.

The sheet member may be supported to a predetermined surface that is disposed to be separated from the sheet member by a support tool.

A sheet surface of the sheet member may be disposed to face the predetermined surface.

A sheet surface of the sheet member may be disposed in a direction that intersects the predetermined surface.

A sheet surface of the sheet member may be in surface contact with the predetermined surface.

The sheet member may be disposed on the predetermined surface in a state in which a sheet surface is curved, and
at least a part of an end of the sheet member may be in contact with the predetermined surface.

The predetermined surface may be a ceiling surface.

The predetermined surface may be a surface that is disposed in a direction different from a direction of a ceiling surface.

A sheet surface of the sheet member may be a flat surface.

A sheet surface of the sheet member may be a curved surface.

A plurality of the sheet members may be included to be disposed to come into close contact with each other, each of the sheet members including the control layer and the electrode, and
ends of two sheet members disposed adjacent to each other among the plurality of sheet members may be joined to be flush with each other.

The screen according to any one of claims 1 to 11;
a support tool of which one end is connected to one or more sites of the sheet member and the other end is connected to a predetermined surface disposed to be separated from the sheet member, and which supports the sheet member at the predetermined surface; and
a light source that irradiates the screen with coherent light may be included.

The light source may be disposed along the predetermined surface.

The light source may be disposed in a range of a normal direction within a sheet surface of the sheet member.

The light source may be disposed at a position that deviates from a range of a normal direction within a sheet surface of the sheet member.

A light source control unit that scans a region within a sheet surface of the sheet member with coherent light that is emitted from the light source may be included.

The sheet member may be disposed on a predetermined reference surface, and
the light source may be disposed on the reference surface.

The sheet member may be disposed to surround at least a part of the light source.

The sheet member may be a hollow spherical body, and
the light source may be disposed at the inside of the spherical body.

The spherical body may be obtained by joining ends of two sheet members disposed adjacent to each other among a plurality of the sheet members disposed to come into close contact with each other to be flush with each other.

The sheet member may be a hollow cylindrical body, and
the light source may be disposed at the inside of the cylindrical body.

The cylindrical body may be obtained by curving the sheet member and joining both opposite ends to be flush with each other, or by joining ends of two sheet members disposed adjacent to each other among a plurality of the sheet members disposed to come into close contact with each other to be flush with each other.

The screen; and
a light source that emits coherent light may be included.

According to an aspect of the present disclosure, there is provided a display device including:
a sheet member including a control layer that includes a plurality of particles or a predetermined liquid, and an electrode that applies a voltage to the control layer to drive the plurality of particles or the predetermined liquid;
a drive unit that generates a driving force that causes the sheet member to float in a three-dimensional space;
a support tool of which one end is connected to one or more sites of the sheet member and the other end is connected to the drive unit, and which supports the sheet member to the drive unit; and
a light source that is disposed along the drive unit,
in which the plurality of particles or the predetermined liquid allows light emitted from the light source to be transmitted or reflected, and
the electrode causes at least one of movement and rotation of the plurality of particles to occur at the inside of the control layer in correspondence with the voltage, or causes the predetermined liquid to move at the inside of the control layer in correspondence with the voltage.

A sheet surface of the sheet member may be a flat surface.

A sheet surface of the sheet member may be a curved surface.

A plurality of the sheet members may be included to be disposed to come into close contact with each other, each of the sheet members including the control layer and the electrode, and
ends of two sheet members disposed adjacent to each other among the plurality of sheet members may be joined to be flush with each other.

According to an aspect of the present disclosure, there is provided a display device including:
a plurality of sheet members which are disposed to come into close contact, each of the sheet members including a control layer that includes a plurality of particles or a predetermined liquid, and an electrode that applies a voltage to the control layer to drive the plurality of particles or the predetermined liquid;
a light source that irradiates the plurality of sheet members with coherent light; and
a light source control unit that scans each sheet surface of the plurality of sheet members with the coherent light from the light source,
in which ends of two sheet members disposed adjacent to each other among the plurality of sheet members are joined to be flush with each other, and the light source control unit performs scanning with the coherent light so that a joint of the two sheet members disposed adjacent to each other is not irradiated with the coherent light from the light source.

According to an aspect of the present disclosure, there is provided a display device including:
a sheet member including a control layer that includes a plurality of particles or a predetermined liquid, and an electrode that applies a voltage to the control layer to drive the plurality of particles or the predetermined liquid; and
a plurality of light sources which respectively irradiate corresponding partial regions on a sheet surface of the sheet member with coherent light,
in which two partial regions, which are disposed adjacent to each other among a plurality of the partial regions irradiated with the coherent light from the plurality of light sources, partially overlap each other.

A light source control unit that adjusts light intensity of the coherent light of the plurality of light sources which is used to irradiate an overlapping region of the two partial regions disposed adjacent to each other may be included.

Each of the plurality of particles may include a first portion and a second portion.

The plurality of particles may have a charging property, and
the electrode may form an electric field that causes the plurality of particles to move.

A plurality of partition wall portions may be included, each of the plurality of partition wall portions accommodating the plurality of particles,
in which each of the plurality of partition wall portions may include
a first liquid that has conductivity or polarity,
a second liquid that is disposed to come into contact with the first liquid, and corresponds to the predetermined liquid that is immiscible with the first liquid,
an electrical insulating layer that is disposed to come into contact with the second liquid, and
an electrode that causes a contact angle of the second liquid on the electrical insulating layer to vary in response to a voltage that is applied to the second liquid.

A projector that includes the light source may be included, and
the light source may emit image coherent light that is generated in the projector.

According to an aspect of the present disclosure, there is provided a display device including:
a sheet-shaped screen including a control layer that includes a plurality of particles or a predetermined liquid, and an electrode that applies a voltage to the control layer to drive the plurality of particles or the predetermined liquid;
a drive device that drives the electrode;
a projection device that projects coherent light to the screen; and
a housing that accommodates at least the projection device,
in which the projection device includes
a light source that emits the coherent light, and
a scanning device that scans the screen with the coherent light that is emitted from the light source, and
the screen is disposed at least at a part of an outer surface of the housing.

A light propagation direction changing member that is accommodated in the housing and guides the coherent light output from the projection device to the screen by changing a propagation direction of the coherent light may be included.

The light source and the scanning device may be disposed at a location that does not block an optical path of the coherent light that propagates toward the screen from the light propagation direction changing member.

The light propagation direction changing member may be a reflection mirror or a prism.

The light propagation direction changing member may guide the coherent light to the screen by changing the propagation direction of the coherent light one or more times, and an optical path length of light that is incident to the screen at a shortest distance in the coherent light emitted from the projection device may be longer than an inner dimension length of the depth of the housing.

The light propagation direction changing member may cause the coherent light to be incident to the screen along a direction that is inclined with respect to a normal direction of a projection surface of the screen.

The housing may be curved or bent along an incidence direction and an emission direction of the coherent light in the light propagation direction changing member.

An optical system that is accommodated in the housing and controls a diffusion range of the coherent light output from the projection device may be included.

The optical system may include a plurality of lenses which are disposed to be separated from each other in an optical axis direction.

The projection device may include a plurality of projection units which project the coherent light to respective different regions of the screen, and
each of the plurality of projection units may include the light source and the scanning device.

A parallelizing optical system that is disposed on an incidence surface side of the screen and may parallelize a plurality of beams of coherent light emitted from the projection device may be included.

A projection range on the screen with the coherent light emitted from the plurality of projection units for each of the plurality of projection units may be adjusted for each of the plurality of projection units.

The projection range adjusting unit may adjust the projection range for each of the plurality of projection units so that a deviation of the projection range in at least one of a horizontal direction and a vertical direction on the screen with the coherent light emitted from the plurality of projection units is reduced.

The projection range adjusting unit may adjust the projection range for each of the plurality of projection units in correspondence with an ambient temperature of the housing.

The screen may include a plurality of screen units which are disposed at locations different from each other on the outer surface of the housing, and
the projection device may include a plurality of projection units, each irradiating a corresponding screen unit among the plurality of screen units with coherent light.

Each of the plurality of projection units may be disposed at a location different from an optical path of the coherent light that is emitted from a different projection unit in the plurality of projection units.

The projection device may be disposed in a state of being biased with respect to a disposition location of the screen.

A plurality of the screens, which are arranged in different plane directions of the outer surface of the housing, may be included, and the projection device may scan the plurality of screens with the coherent light.

The screen may include a bent surface or a curved surface, and
the bent surface or the curved surface may be projected by one or a plurality of the projection devices.

The projection device may be disposed at a position that is hidden from a projection region of the screen when the screen is viewed from a front direction.

The projection device may be disposed at a position that overlaps an edge portion of the screen when the screen is viewed from the front direction.

### Advantageous Effects of Invention

According to the present disclosure, it is possible to reduce speckles even when variously changing an installation location, a shape, and a size of a screen.

### Brief Description of Drawings

Fig. 1 is a view illustrating an example of a schematic configuration of a display device.
Fig. 2 is a view illustrating a Raster scanning method.
Fig. 3 is a cross-sectional view illustrating a cross-sectional structure of a screen.
Fig. 4 is an enlarged view of particles.
Fig. 5 is a view illustrating an AC voltage waveform.
Fig. 6 is a cross-sectional view of a screen using particles having a structure different from a structure in Fig. 3.
Fig. 7 is a cross-sectional view of a screen using particles having a structure different from the structures in Fig. 3 and Fig. 6.
Fig. 8 is a cross-sectional view of a screen using particles having a structure different from the structures in Fig. 3, Fig. 6, and Fig. 7.
Fig. 9 is a cross-sectional view of a transmission-type screen in which the particles in Fig. 8 are rotated by 90°.
Fig. 10 is a view illustrating an example in which both of a first electrode and a second electrode are formed in a stripe shape.
Figs. 11(a) to 11(c) are views illustrating an example in which particles are included in one or a plurality of cavities.
Fig. 12A is a schematic view illustrating an example of an electrophoresis screen.
Fig. 12B is a schematic view illustrating an example of an electrophoresis screen.
Fig. 12C is a view illustrating an example in which a plurality of microcapsules are disposed between two electrodes.
Fig. 13A is a view illustrating an example in which movement of particles is controlled for every cell portion.
Fig. 13B is a view illustrating a microcup structure.
Fig. 14 is a view illustrating an electronic powder method.
Fig. 15 is a view illustrating an electrowetting method.
Fig. 16A is a view illustrating a first use example of the screen.
Fig. 16B is a view in which a frame and an optical sheet are added to Fig. 15A.
Fig. 16C is a view in which a support substrate and the optical sheet are added to Fig. 15A.
Fig. 17A is a view illustrating an example in which a sheet surface is set to a curved surface.
Fig. 17B is a view in which the frame and the optical sheet are added to Fig. 16A.
Fig. 17C is a view in which a screen is set to a hermetic sealing structure.
Fig. 18A is a view illustrating a screen in which ends of two sheet member disposed adjacent to each other are joined to each other.
Fig. 18B is a view in which a frame and an optical sheet are added to Fig. 17A.
Fig. 18C is a view in which a screen is set as a bag body. Fig. 18D is a view in which a light-shielding member is disposed in a gap between the two sheet members.
Fig. 18E is a view in which the two sheet members partially overlap each other.
Fig. 18F is a view in which a light source is provided in each of a plurality of sheet members.
Fig. 19A is a view illustrating a second use example of the screen.
Fig. 19B is a view in which a frame is disposed on an upper surface side and a lower surface side of the screen illustrated in Fig. 18A.
Fig. 19C is a view in which the frame is disposed at the periphery of the screen illustrated in Fig. 18A.
Fig. 20A is a view illustrating an example in which a sheet surface is set to a curved surface.
Fig. 20B is a view in which a frame is disposed on an upper surface side and a lower surface side of the screen illustrated in Fig. 19A.
Fig. 21 is a view illustrating a screen in which ends of sheet members which are disposed adjacent to each other are joined to each other.
Fig. 22 is a view illustrating a screen that is hung by a plurality of support members which are attached to a surface in a direction different from that of a ceiling surface.
Fig. 23A is a view illustrating an example in which a support tool is attached to a support member and a screen is hung down.
Fig. 23B is a view in which the screen illustrated in Fig. 22A is movable.
Fig. 24 is a view illustrating an example in which a sheet surface of a screen is brought into contact with the ceiling surface.
Fig. 25 is a view illustrating an example in which a curved-surface shaped screen is attached to the ceiling surface.
Fig. 26 is a view illustrating an example in which a direction of the sheet surface is made to be different from that of the screen illustrated in Fig. 23 by 90°.
Fig. 27 is a view illustrating an example in which a sheet surface of a screen is brought into contact with a surface that is disposed in a direction different from that of the ceiling surface.
Fig. 28A is a view illustrating an example in which a curved-surface shaped screen is attached to a wall surface
Fig. 28B is a view illustrating an example in which a light source is installed on a wall side.
Fig. 29A is a view illustrating a fourth use example of the screen.
Fig. 29B is a view illustrating an example in which a spherical body illustrated in Fig. 28A is set to a three-layer structure.
Fig. 30A is a view illustrating a fourth use example of a cylindrical screen.
Fig. 30B is a view illustrating a fourth use example of a cubic screen.
Fig. 31 is a development view illustrating a method of preparing a spherical sheet member.
Fig. 32 is a view illustrating an example of a screen that floats on a water surface.
Fig. 33A is a view illustrating a fifth use example of the screen .
Fig. 33B is a view illustrating an example in which the screen illustrated in Fig. 32A is parallel to a vertical direction.
Fig. 33C is a view in which a range from a drive unit to a peripheral edge portion of a screen is covered with a covering member.
Fig. 34A is a view illustrating an example in which a screen has a curved surface.
Fig. 34B is a view illustrating an example in which the screen illustrated in Fig. 33A is parallel to a vertical direction.
Fig. 35A is a view illustrating a screen obtained by joining a plurality of sheet members.
Fig. 35B is a view illustrating an example in which the screen illustrated in Fig. 34A is parallel to a vertical surface.
Fig. 36 is a block diagram illustrating a schematic configuration of a display device 10 including a screen obtained by connecting a plurality of sheet members illustrated in Fig. 17 or the like.
Fig. 37 is a view illustrating a coherent light scanning trajectory on a sheet surface.
Fig. 38 is a view illustrating an example in which a sheet surface of one screen is irradiated by using a plurality of light sources.
Fig. 39 is a view illustrating a state in which an upper cover of a housing of a display device according to one specific example is detached.
Fig. 40 is a plan view illustrating an example in which a light propagation direction changing member formed from a reflection mirror is provided.
Fig. 41 is a plan view seen from an arrow direction in Fig. 40.
Fig. 42 is a view illustrating an example in which a concave mirror is provided.
Fig. 43 is a view illustrating an example in which a convex mirror is provided.
Fig. 44 is a view illustrating an example in which a housing is set to an L-shape.
Fig. 45 is a view illustrating an example in which a first cylindrical lens and a second cylindrical lens which are disposed to be separated from each other in an optical axis direction are provided.
Fig. 46 is a view illustrating an example in which a plurality of projectors which project coherent light to different regions of a screen are provided.
Fig. 47 is a view illustrating a modification example of Fig. 46.
Fig. 48 is a view illustrating an example in which four screens are projected by different projectors.
Fig. 49 is a view illustrating an example in which two screens opposite to each other are projected by different projectors.
Fig. 50 is a view illustrating a modification example of Fig. 49.
Fig. 51 is a view illustrating an example in which coherent light is projected from a projector that is disposed in a state of being biased in a housing.
Fig. 52 is a view illustrating an example of a display device in which coherent light is projected from one projector to two screens which are disposed on two lateral surfaces in a housing having a rectangular parallelepiped shape.
Fig. 53 is a view illustrating an example in which projection is performed from single projector to a curved-surface shaped screen.
Fig. 54 is a view illustrating an example in which projection is performed from two projectors to a curved-surface shaped screen.
Fig. 55 is a view illustrating an example in which a projector is provided separately for every curved-surface shape including each inflection point.
Figs. 56(a) to 56(d) are views illustrating an example in which a projector is configured such that its shadow is not visually recognized on a screen side.
Fig. 57 is a view illustrating an example in which an optical path length of a projector is lengthened.
Fig. 58 is a view illustrating an example in which a plurality of display devices including the housing illustrated in Fig. 39 are arranged in parallel in a vertical direction.
Fig. 59A is a view illustrating an example in which a visual line of an observer faces an obliquely upward side.
Fig. 59B is a view illustrating an example in which a visual line of an observer faces an obliquely downward side.
Fig. 60A is a view illustrating an example in which a projection direction is changed by disposing a lens sheet in front of a screen.
Fig. 60B is an enlarged view of the lens sheet illustrated in Fig. 60A.
Fig. 60C is a view illustrating an example in which a projection direction is changed to a direction different from a direction in Fig. 60A.
Fig. 61 is a view illustrating an example in which reflection occurs by a reflection mirror that is disposed on an upper surface of the housing.
Fig. 62 is a view illustrating a configuration of a display device having a screen projection range adjusting function.
Fig. 63 is a block diagram illustrating an internal configuration of each projector.

### Description of Embodiments

Hereinafter, an embodiment of the present disclosure will be described with reference to the drawings. Furthermore, in the drawings which are appended to this specification, scales, horizontal and vertical dimension ratios, and the like are appropriately exaggerated from actual dimensions for the sake of illustration and convenience of understanding.

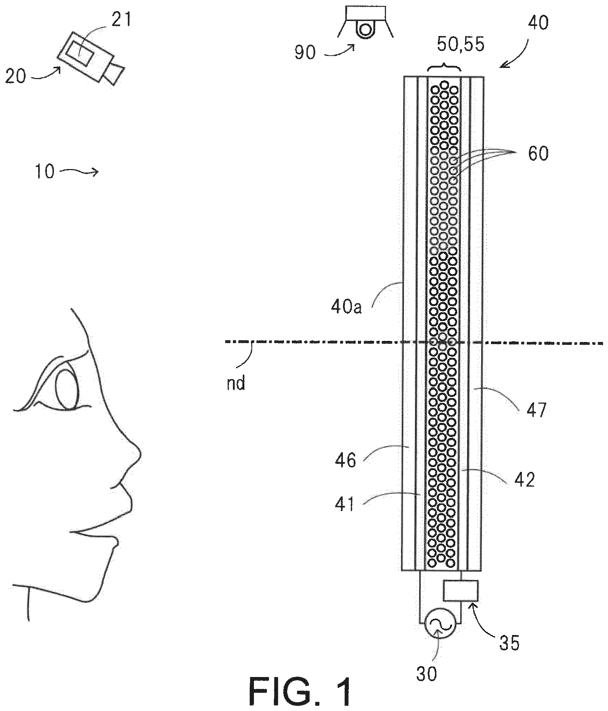

A screen according to this embodiment can be used in a display device. Fig. 1 is a view illustrating an example of a schematic configuration of a display device 10. The display device 10 illustrated in Fig. 1 includes a projector 20, and a screen 40 that is irradiated with image light from the projector 20. As described later, the screen 40 can allow a diffusion wave surface that have an effect on incident light to vary with the passage of time, and thus it is possible to make speckles be inconspicuous.

In addition, the display device 10 illustrated in Fig. 1 further includes a power source 30 and a control device 35. The power source 30 applies an AC voltage to the screen 40. The control device 35 adjusts a voltage applied form the power source 30 and controls a state of the screen 40. In addition, the control device 35 also controls an operation of the projector 20. As an example, the control device 35 can be constituted by a general-purpose computer.

The projector 20 projects light that forms an image, that is, image light to the screen 40. In an example illustrated in the drawing, the projector 20 includes a coherent light source 21 that oscillates coherent light, and a scanning device (not illustrated) that adjusts an optical path of the coherent light source 21. As a typical example, the coherent light source 21 is constituted by a laser light source that oscillates laser light. The coherent light source 21 may include a plurality of coherent light sources which generate light beams having wavelength regions different from each other.

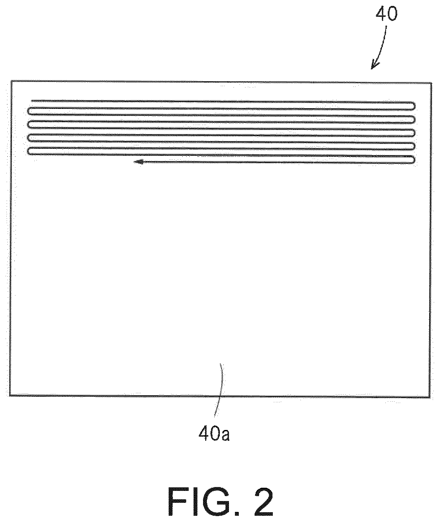

In the example illustrated in the drawing, the projector 20 projects coherent light onto the screen 40 by a Raster scanning method. As illustrated in Fig. 2, the projector 20 projects coherent light to scan the entire region on the screen 40. Scanning is performed at a high speed. The projector 20 stops emission of the coherent light from the coherent light source 21 in correspondence with an image to be formed. That is, coherent light is projected to only a position on the screen 40 at which an image is to be formed. As a result, an image is formed on the screen 40. An operation of the projector 20 is controlled by the control device 35.

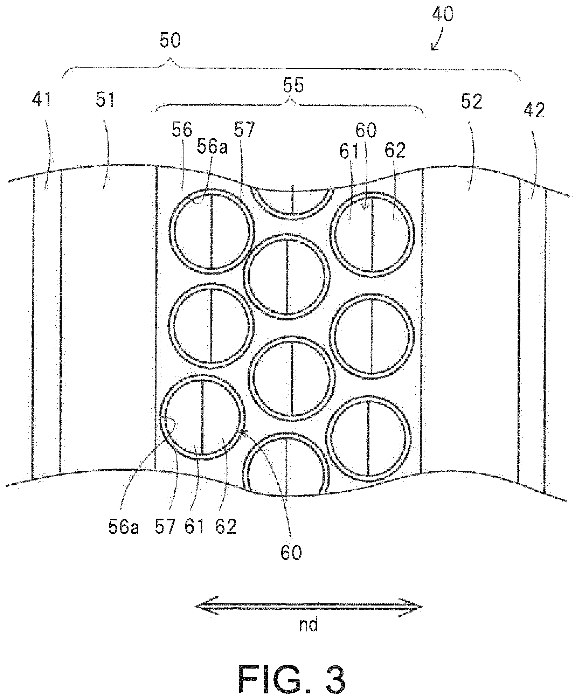

Next, the screen 40 will be described. Fig. 3 is a cross-sectional view illustrating a cross-sectional structure of a screen. The screen 40 according to an embodiment includes a particle sheet 50 including a plurality of particles, and electrodes 41 and 42 which are connected to the power source 30. A first electrode 41 spreads out in a plane shape on one main surface of the particle sheet 50, and a second electrode 42 spreads out in a plane shape on the other main surface of the particle sheet 50. In addition, as illustrated in Fig. 1, the screen 40 includes a first cover layer 46 that covers the first electrode 41 and forms one outermost surface of the screen 40, and a second cover layer 47 that covers the second electrode 42 and forms the other outermost surface of the screen 40.

The screen 40 illustrated in Fig. 1 constitutes a reflection-type screen. The projector 20 irradiates a display-side surface 40a formed by the first cover layer 46 with image light. The image light is transmitted through the first cover layer 46 and the first electrode 41 of the screen 40, and is diffused and reflected in the particle sheet 50. As a result, an observer who is located to face the display-side surface 40a of the screen 40 can observe an image.

The first electrode 41 and the first cover layer 46 through which the image light is transmitted are transparent. It is preferable that a transmittance of the first electrode 41 and the first cover layer 46 in a visible light region is 80% or greater, and more preferably 84% or greater. Furthermore, a visible-light transmittance is specified as an average value of transmittances in respective wavelengths when being measured in a measurement wavelength range of 380 nm to 780 nm by using a spectrophotometer ("UV-3100PC": a product conforming to JIS K0115, manufactured by Shimadzu Corporation).

As a conductive material of the first electrode 41, indium tin oxide (ITO), indium zinc oxide (InZnO), Ag nanowire, carbon nanotube, or the like can be used. On the other hand, the first cover layer 46 is a layer that protects the first electrode 41 and the particle sheet 50. The first cover layer 46 can be formed from a transparent resin, for example, polyethylene terephthalate, polycarbonate, a cycloolefin polymer, and the like which have excellent stability.

The second electrode 42 can be constituted in a similar manner as in the first electrode 41. In addition, the second cover layer 47 can be constituted in a similar manner as in the first cover layer 46. However, it is not necessary for the second electrode 42 to be transparent. Therefore, for example, the second electrode 42 can be formed by a metal thin film of aluminum, copper, or the like. The second electrode 42 constituted by a metal film can function as a reflection layer that reflects image light in the reflection type screen 40. The second cover layer 47 can be constituted in a similar manner as in the first cover layer 46.

Next, the particle sheet 50 will be described. As illustrated in Fig. 3, the particle sheet 50 includes a pair of base materials 51 and 52, and a particle layer 55 that is provided between the pair of base materials 51 and 52. A first base material 51 supports the first electrode 41, and a second base material 52 supports the second electrode 42. The particle layer 55 is hermetically sealed between the first base material 51 and the second base material 52. The first base material 51 and second base material 52 can be constituted by a material that can hermetically seal the particle layer 55 and has strength capable of functioning as a support body of the electrodes 41 and 42, and the particle layer 55, for example, a polyethylene terephthalate resin film. Furthermore, in the embodiment illustrated in the drawing, the screen 40 is constituted by a reflection type screen, and image light is transmitted through the first base material 51. Therefore, it is preferable that the first base material 51 is transparent, and has the same visible-light transmittance as that of the first electrode 41 and the first cover layer 46.

Next, the particle layer 55 will be described. As illustrated in Fig. 3, the particle layer 55 includes a plurality of particles 60 and a support portion 56 that holds the particles 60. The support portion 56 holds the particles 60 in an operation possible manner. In the example illustrated in the drawing, the support portion 56 includes a plurality of cavities 56a, and each of the particles 60 is accommodated in each of the cavities 56a. An inner dimension of the cavity 56a is greater than an outer dimension of the particle 60 accommodated in the cavity 56a. Therefore, the particles 60 can operate at the inside of the cavity 56a. The support portion 56 swells due to a solvent 57. At the inside of the cavity 56a, a space between the support portion 56 and the particles 60 is filled with the solvent 57. According to the support portion 56 that swells due to the solvent 57, it is possible to stably secure a smooth operation of the particles 60. Hereinafter, the support portion 56, the solvent 57, and the particles 60 will be sequentially described.

First, the support portion 56 and the solvent 57 will be described. The solvent 57 is used to make the operation of the particles 60 be smooth. The solvent 57 is held at the inside of the cavity 56a when the support portion 56 swells. It is preferable that the solvent 57 has a low polarity so as not to interrupt an operation of the particles 60 which corresponds to an electric field. As the solvent 57 having a low-polarity, various materials which make the operation of the particles 60 smooth can be used. Examples of the solvent 57 include a dimethyl silicone oil, an isoparaffin-based solvent, a linear-chain paraffin-based solvent, and linear chain alkane such as dodecane and tridecane.

Next, as an example, the support portion 56 can be constituted by an elastomer sheet formed from an elastomer material. The support portion 56 as the elastomer sheet can swell the above-described solvent 57. Examples of a material of the elastomer sheet include a silicone resin, a (fine-crosslinked) acrylic resin, a (fine-crosslinked) styrene resin, a polyolefin resin, and the like.

In the example illustrated in the drawing, at the inside of the support portion 56, the cavities 56a are distributed at a high density in a plane direction of the screen 40. In addition, the cavities 56a are distributed also in a normal direction nd of the screen 40. In the example illustrated in the drawing, groups of the cavities 56a which spread in a plane shape are arranged in three layers in a thickness direction of the screen 40.

Next, the particles 60 will be described. The particles 60 have a function of changing a propagation direction of image light that is projected from the projector 20. In the example illustrated in the drawing, the particles 60 have a function of diffusing, particularly, diffusing and reflecting the image light.

Each of the particles 60 includes a first portion 61 and a second portion 62 which are different in a specific dielectric constant. Therefore, when the particle 60 is placed in an electric field, an electronic dipole moment occurs in the particle 60. At this time, the particle 60 operates toward a position at which a vector of the dipole moment faces a direction opposite to that of a vector of the electric field. Therefore, when a voltage is applied between the first electrode 41 and the second electrode 42 and an electric field occurs in the particle sheet 50 that is located between the first electrode 41 and the second electrode 42, the particle 60 operates at the inside of the cavity 56a to take a stable posture with respect to the electric field, that is, a stable position and a stable orientation with respect to the electric field. The screen 40 causes the diffusion wave surface to vary in accordance with the operation of the particles 60 having the light diffusing function.

The particles 60 including the first portion 61 and the second portion 62 which are different in the specific dielectric constant can be manufactured by various methods including a known technology. For example, the particles 60 can be manufactured by using a method in which organic or inorganic spherical particles are arranged in a single layer by using an adhesive tape or the like, and a resin component layer or an inorganic material layer which is positively or negatively charged differently from the spherical particles is deposited on a semi-spherical plane (deposition method, for example, JP 56-67887 A), a method of using a rotary disc (for example, JP 6-226875 A), a method in which two kinds of liquid droplets which are different in the specific dielectric constant are brought into contact with each other in the air to be one liquid droplet by using a spray method or an inkjet method (for example, JP 2003-140204 A), or a microchannel manufacturing method that is suggested in JP 2004-197083 A.

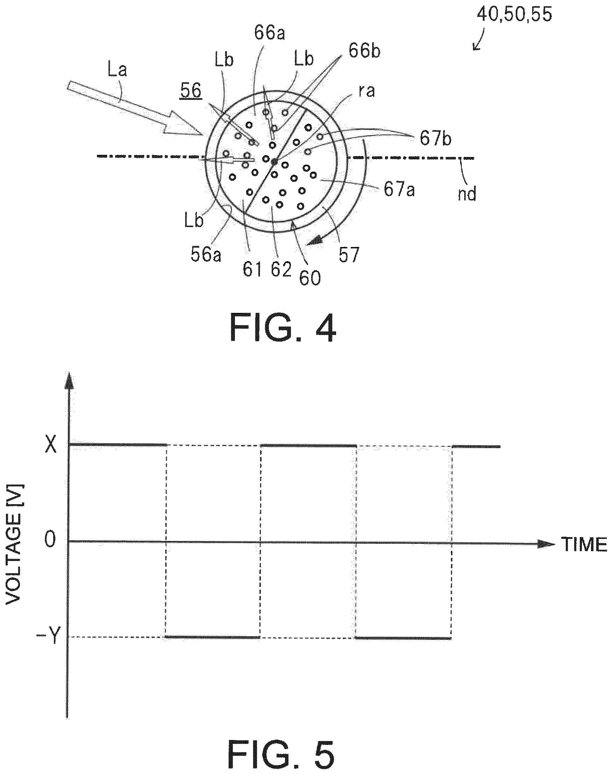

Fig. 4 is an enlarged view of each of the particles 60. The particle 60 has a spherical shape, and the first portion 61 and the second portion 62 have a semi-spherical shape. The first portion 61 of the particle 60 includes a first main portion 66a, and a first diffusion component 66b that is dispersed in the first main portion 66a. Similarly, the second portion 62 includes a second main portion 67a, and a second diffusion component 67b that is dispersed in the second main portion 67a. Therefore, the spherical particle 60 can exhibit a diffusion function with respect to light that propagates at the inside of the first portion 61 and light that propagates at the inside of the second portion 62. Here, the diffusion components 66b and 67b are components that can have an operation of changing a propagation direction of the light through reflection, diffraction, and the like with respect to the light that propagates at the inside of the particle 60. For example, the light diffusion function (light scattering function) of the diffusion components 66b and 67b can be applied by constructing the diffusion components 66b and 67b from a material having a refractive index different from that of a material that constitutes the main portions 66a and 67a of the particle 60, or by constructing the diffusion components 66b and 67b from a material that can have a reflection operation with respect to light. Examples of the diffusion components 66b and 67b which have a refractive index different from that of the material that constitutes the main portions 66a and 67a include a resin bead, a glass bead, a metal compound, a porous material containing a gas, and a simple air bubble.

In the example illustrated in the drawing, the particle 60 has a single color. That is, the first portion 61 and the second portion 62 have the same color. The color of the first portion 61 and the second portion 62 can be adjusted by adding a color material such as a pigment and a dye to the first portion 61 and the second portion 62. As the pigment or the dye, various known pigments, dyes, and the like can be used.

The single color that is used in the particle 60 represents such a uniform color that an observer who observes the display-side surface 40a of the screen 40 cannot recognize a color variation of the screen 40 at a typical observation ability even when the particle 60 operates in the particle sheet 50 in a state in which image display is not performed with the screen 40. That is, in a case where the display-side surface 40a of the screen 40 in a state in which the first portion 61 of the particle 60 faces the display-side surface 40a of the screen 40, and the display-side surface 40a of the screen 40 in a state in which the second portion 62 of the particle 60 faces the display-side surface 40a of the screen 40 are recognized as the same color through observation with typical attentiveness of an observer in a state in which image display is not performed with the screen 40, it can be said that the particle 60 has a single color.

Furthermore, as an example, the particle layer 55, the particle sheet 50, and the screen 40 can be prepared as follows.

The particle layer 55 can be manufactured by a known manufacturing method. That is, first, an ink in which the particles 60 are dispersed in a polymeric silicone rubber is prepared. Next, the ink is stretched by a coater or the like, and is polymerized through heating into a sheet. Through the above-described procedure, the support portion 56 that holds the particles 60 is obtained. Next, the support portion 56 is immersed in the solvent 57 such as a silicone oil for a constant period. When the support portion 56 swells, a gap filled with the solvent 57 is formed between the support portion 56 formed from the silicone rubber and the particles 60. As a result, the cavity 56a that accommodates the solvent 57 and the particles 60 is constructed. In this manner, the particle layer 55 can be manufactured.

Next, the screen 40 can be prepared by using the particle layer 55 in accordance with a manufacturing method disclosed in JP 2011-112792 A. First, the particle layer 55 is covered by the pair of base materials 51 and 52, and the particle layer 55 is hermetically sealed by using a laminate, an adhesive, or the like. Accordingly, the particle sheet 50 is prepared. Next, the first electrode 41 and the second electrode 42 are provided on the particle sheet 50, and the first cover layer 46 and the second cover layer 47 are laminated, thereby obtaining the screen 40.

Next, description will be given of an operation when displaying an image by using the display device 10.

First, the coherent light source 21 of the projector 20 oscillates coherent light under control of the control device 35. Light from the projector 20 is emitted to the screen 40 after an optical path is adjusted by a scanning device (not illustrated). As illustrated in Fig. 2, the scanning device (not illustrated) adjusts an optical path of light in order for the display-side surface 40a of the screen 40 to be scanned with the light. However, emission of the coherent light by the coherent light source 21 is controlled by the control device 35. The control device 35 stops emission of the coherent light from the coherent light source 21 in correspondence with an image desired to be displayed on the screen 40. An operation of the scanning device included in the projector 20 is set to a high speed to a certain extent that is indecomposable by human's eyes. Therefore, an observer simultaneously observes light beams which are emitted to respective positions on the screen 40 with time intervals.

Light that is projected onto the screen 40 is transmitted through the first cover layer 46 and the first electrode 41, and reaches the particle sheet 50. The light is diffused and reflected by the particles 60 of the particle sheet 50, and is emitted toward various directions as an observer side of the screen 40. Therefore, at respective positions as the observer side of the screen 40, reflected light from the respective positions on the screen 40 can be observed. As a result, it is possible to observe an image corresponding to regions on the screen 40 which are irradiated with the coherent light.

In addition, the coherent light source 21 may include a plurality of light sources which emits coherent light of wavelength regions different from each other. In this case, the control device 35 controls light sources corresponding to light beams of respective wavelength regions independently from the other light sources. As a result, it is possible to display a color image on the screen 40.

Incidentally, when forming an image on a screen by using coherent light, spot-shaped speckles are observed. As a main cause of the speckles, it is considered that coherent light represented by laser light causes an interference pattern to occur on an optical sensor plane (on a retina in a case of human beings) after being diffused on the screen. Particularly, in a case where the screen is irradiated with the coherent light by Raster canning, the coherent light is incident to respective positions on the screen from a constant incidence direction. Therefore, in a case of employing the Raster scanning, a speckle wave surface that occurs at respective points on the screen does not move as long as the screen does not fluctuate, and when a speckle pattern is visually recognized with observer's eyes in combination with an image, image quality of a display image significantly deteriorates.

On the other hand, the screen 40 of the display device 10 according to this embodiment causes a diffusion wave surface to vary with the passage of time. When the diffusion wave surface in the screen 40 varies, the speckle pattern on the screen 40 varies with the passage of time. In addition, when the variation of the diffusion wave surface with the passage of time is set to be sufficiently high, speckle patterns overlap each other and are equalized, and are observed by an observer. Accordingly, it is possible to make speckles be inconspicuous.

The screen 40 illustrated in the drawing includes the pair of electrodes 41 and 42. The pair of electrodes 41 and 42 is electrically connected to the power source 30. The power source 30 can apply a voltage to the pair of electrodes 41 and 42. When a voltage is applied between the pair of electrodes 41 and 42, an electric field is formed in the particle sheet 50 that is located between the pair of electrodes 41 and 42. The particles 60 including the plurality of portions 61 and 62 having specific dielectric constants different from each other are held in an operation possible manner in the particle layer 55 of the particle sheet 50. As the particles 60 are originally charged or when an electric field is formed at least in the particle layer 55, a dipole moment occurs, and thus the particles 60 operate in accordance with a vector of the electric field that is formed. When the particles 60 having a function of changing a propagation direction of light, for example, a reflection function or a diffusion function operate, diffusion characteristics of the screen 40 vary with the passage of time. As a result, it is possible to make speckles be inconspicuous. In Fig. 4, a symbol "La" represents image light that is emitted to the screen 40 from the projector 20, and a symbol "Lb" represents image light that is diffused in the screen 40.

Furthermore, with regard to a difference of the specific dielectric constant between the first portion 61 and the second portion 62 of the particles 60, it is sufficient that the specific dielectric constant is different to a certain extent capable of exhibiting a speckle reducing function. Therefore, whether or not the specific dielectric constant is different between the first portion 61 and the second portion 62 of the particles 60 can be determined in accordance with whether or not the particles 60 which are held in an operation possible manner can operate in accordance with a variation of the electric field vector.

Here, the principle of an operation of the particles 60 with respect to the support portion 56 is as follows. A direction and a position of the particles 60 is varied so that a charge or a dipole moment of the particles 60 has a stable positional relationship with respect to an electric field vector. Therefore, when a constant electric field is continuously applied to the particle layer 55, the operation of the particles 60 stops after a constant period. Furthermore, it is necessary for the operation of the particles 60 with respect to the support portion 56 to continue to make speckles be inconspicuous. Here, the power source 30 applies a voltage so that an electric field that is formed in the particle layer 55 varies with the passage of time. In the example illustrated in the drawing, the power source 30 applies a voltage between the pair of electrodes 41 and 42 to invert a vector of the electric field generated in the particle sheet 50. For example, in an example illustrated in Fig. 5, an AC voltage in which a voltage of X [V] and a voltage of -Y [V] are repeated is applied to the pair of electrodes 41 and 42 of the screen 40 from the power source 30.

Furthermore, each of the particles 60 is accommodated in the cavity 56a that is formed in the support portion 56. The cavity 56a has an approximately spherical inner shape. Therefore, the particle 60 can rotate and vibrate around a rotation axial line ra extending in a direction perpendicular to a paper surface in Fig. 4. However, the particle 60 performs not only a repetitive rotary movement but also a translation movement in correspondence with the size of the cavity 56a that accommodates the particle 60. In addition, the cavity 56a is filled with the solvent 57. The solvent 57 makes the operation of the particle 60 with respect to the support portion 56 be smooth.

The particle 60 is not limited to the structure including the first portion 61 and the second portion 62 which have an approximately semi-spherical shape as illustrated in Fig. 2. Hereinafter, a first modification example to a third modification example of the particle 60 will be sequentially described.

### (First Modification Example of Particle 60)

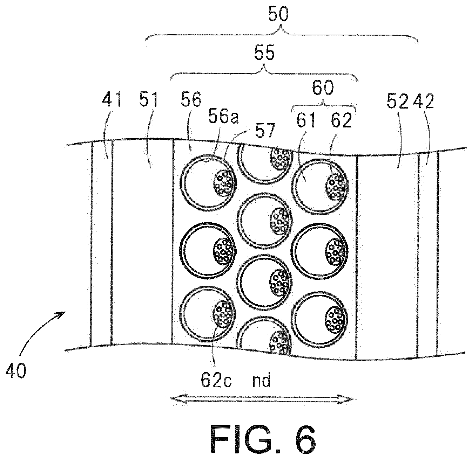

Fig. 6 is a cross-sectional view of the screen 40 that uses particles 60 having a structure different from the structure illustrated in Fig. 3. Each of the particles 60 according to the first modification example as illustrated in Fig. 6 includes a first portion 61 and a second portion 62 which are different in a volume. Fig. 6 illustrates an example in which the volume of the first portion 61 is greater than the volume of the second portion 62. In the case of Fig. 6, the second portion 62 has a shape that is closer to a spherical body or an elliptical spherical body, and a surface of the second portion 62, that is, an interface with the first portion 61 is set to a convex surface. Furthermore, it cannot be said that the particle 60 is necessary to be an ideal spherical body, and the second portion 62 may have a shape that is slightly distorted from an ideal spherical body or elliptical body.

The first portion 61 is a transparent member. Examples of a specific material of the first portion 61 include a silicone oil or a transparent resin member. Ideally, the first portion 61 is disposed on an observer side as illustrated in Fig. 6. Light that is incident to the first portion 61 is transmitted through the first portion 61 as is, and reaches the second portion 62. The second portion 62 is different from the first portion 61 in the specific dielectric constant, and has a light scattering or reflecting function. In addition, the second portion 62 has a refractive index that is different from that of the first portion 61. In addition, a diffusion component 62c that diffuses light may be contained at the inside of the second portion 62. The diffusion component 62c has an operation of causing a propagation direction of light that propagates at the inside of the particle 60 to vary due to reflection, diffraction, or the like.

As described above, the first portion 61 and the second portion 62 are different in optical characteristics, and the surface of the second portion 62 has a convex surface shape. Accordingly, light that reaches the second portion 62 from the first portion 61 is scattered or reflected to a direction corresponding to the convex surface shape of the surface of the second portion 62. Therefore, projection light from the projector 20 is scattered or reflected by the second portion 62, and is projected to the screen 40.

Since the surface of the second portion 62 has the convex surface shape, light that is transmitted through the first portion 61 and reaches the surface of the second portion 62 is scattered or reflected to a direction corresponding to a radius of curvature of the convex surface. A diffusion range of light incident to a convex surface becomes wider than that of light incident to a concave surface. Therefore, as in this embodiment, in a case where the volume of the second portion 62 is smaller than that of the first portion 61, and the surface of the second portion 62 is set to a convex surface, it is possible to widen a diffusion range of light that is incident to each of the particles 60.

In a state in which a voltage is not applied to the first and second electrodes 41 and 42, the particles 60 in the particle layer 55 may face various directions. In this case, as illustrated in Fig. 6, it is possible to arrange the first portions 61 of the particles 60 to face an observer side by applying a predetermined initial voltage between the first and second electrodes. Alternatively, it is also possible to arrange the particles 60 in the direction as in Fig. 6 by adjusting the specific gravities of the first portion 61 and the second portion 62.

In the state illustrated in Fig. 6, when a voltage is applied between the first and second electrodes 41 and 42, an electric field occurs between the first and second electrodes 41 and 42, and an electronic dipole moment occurs in the particles 60 due to the electric field. At this time, each of the particles 60 operates toward a position at which a vector of the dipole moment faces a direction opposite to that of a vector of the electric field. Therefore, when a voltage is applied between the first electrode 41 and the second electrode 42 and an electric field occurs in the particle sheet 50 that is located between the first electrode 41 and the second electrode 42, the particle 60 operates at the inside of the cavity 56a to take a stable posture with respect to the electric field, that is, a stable position and a stable orientation with respect to the electric field. In the state illustrated in Fig. 6, the second portions 62 in the particles 60 are disposed opposite to each other in the plane direction of the particle layer 55. However, when a voltage between the first electrode 41 and the second electrode 42 is allowed to vary, the posture of the particles 60 varies. Accordingly, a surface direction of the second portions 62 with respect to the plane direction of the particle layer 55 varies. Each of the second portions 62 has a function of scattering or reflecting light incident to the first portion 61. Therefore, when the surface direction of the second portion 62 varies, an incidence angle of light incident to the surface of the second portion 62 varies, and a scattering direction or a reflection direction of light in the second portion 62 also varies. Accordingly, it is possible to allow diffusion characteristics of the screen 40 to vary.

### (Second Modification Example of Particles 60)

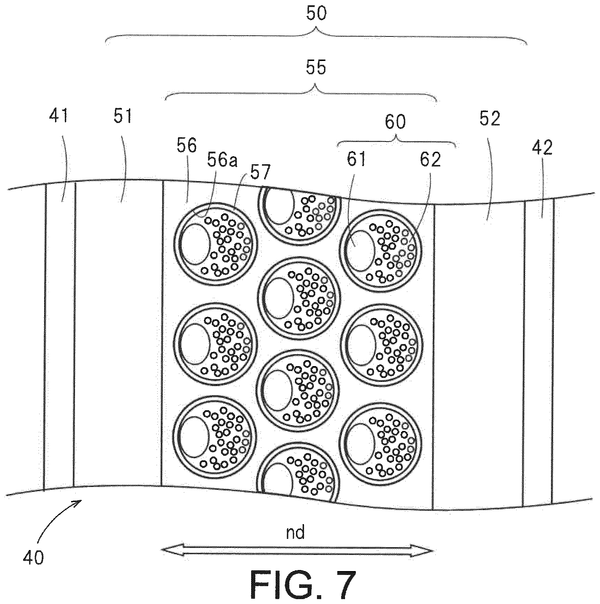

Fig. 7 is a cross-sectional view of the screen 40 that uses particles 60 having a structure different from the structures in Fig. 3 and Fig. 6. Each of the particles 60 according to the second modification example illustrated in Fig. 7 includes a first portion 61 and a second portion 62 of which a volume is greater than that of the first portion 61. A material of the first portion 61 and the second portion 62 is the same as in the second embodiment, the first portion 61 is a transparent member, and the second portion 62 has a light scattering or reflecting function.

An interface between the first portion 61 and the second portion 62 is a convex surface when viewed from the first portion 61, or a concave surface when viewed from the second portion 62. Light incident to the second portion 62 from the first portion 61 propagates in a converging direction. Accordingly, the screen 40 including the particles 60 according to this embodiment can diffuse light to a narrow range. Therefore, it is possible to condense diffused light concentrically to an observer present at a specific position on a front surface side of the screen 40, and the observer can visually recognize the screen 40 at a high contrast.

In Fig. 3, Fig. 6, and Fig. 7 as described above, description has been given of the reflection type screen 40, but the present disclosure is also applicable to a transmission type screen 40. In the case of the transmission type screen 40, it is necessary for light from the projector 20 to be transmitted through the particles 60. Accordingly, for example, a ratio of light that is transmitted through the first portion 61 and is incident to the second portion 62 may be reduced by making the volume of the second portion 62 be smaller than that of the first portion 61. Alternatively, the particles 60 which includes the second portion 62 and the particles 60 which do not include the second portion 62 may be mixed in. In the case of the transmission type screen 40, it is preferable to adjust volume ratios of the first portion 61 and the second portion 62 of each of the particles 60 so that a light transmittance at the entirety of the particle layer 55 becomes higher than a reflectance.

### (Third Modification Example of Particle 60)

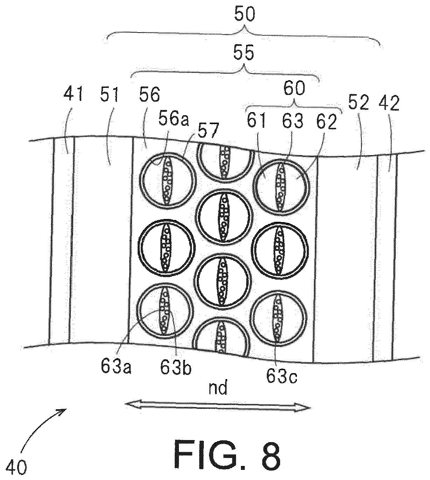

Fig. 8 is a cross-sectional view of the screen 40 that uses particles 60 having a structure different from the structures in Fig. 3, Fig. 6, and Fig. 7. Each of the particles 60 according to the third modification example illustrated in Fig. 8 has a three-layer structure in which a first portion 61, a third portion 63, and a second portion 62 are arranged in parallel in this order, and the first portion 61 is disposed on the observer side. The third portion 63 is in surface contact with the first portion 61, and controls incident light from the first portion 61. The second portion 62 is in surface contact with a second surface 63b that is opposite to a first surface 63a that is in surface contact with the first portion 61 of the third portion 63, and has a specific dielectric constant different from that of the first portion 61. In this manner, the third portion 63 is interposed between the first portion 61 and the second portion 62, and the third portion 63 is in surface contact with the first portion 61 and the second portion 62.

The first portion 61 and the second portion 62 are transparent members. The third portion 63 has a function of scattering or reflecting light incident to the first portion 61. The third portion 63 has a refractive index different from that of the first portion 61. In addition, a diffusion component 63c that diffuses light may be contained at the inside of the third portion 63. The diffusion component 63c has an operation of causing a propagation direction of light that propagates at the inside of the particle 60 to vary due to reflection, diffraction, or the like. For example, the light diffusing function (light scattering function) of the diffusion component 63c may be applied by constructing the diffusion component 63c from a material having a refractive index different from that of a material of a main portion 63c of the particle 60, or by constructing the diffusion component 63c from a material that may have a reflection operation with respect to light. Examples of the diffusion component 63c having a refractive index different from that of a mother material of the third portion 63 include a resin bead, a glass bead, a metal compound, a porous material containing a gas, and a simple air bubble,

Typically, the particle 60 has a spherical shape, and a thin layer that passes through the vicinity of the center of the particle 60 is the third portion 63. The first portion 61 and the second portion 62 are in surface contact with sides of both surfaces (the first surface 63a and the second surface 63b) of the third portion 63. Furthermore, it cannot be said that the shape of the particle 60 is an ideal spherical body. Therefore, the shapes of the first portion 61, the third portion 63, and the second portion 62 also vary in correspondence with the shape of the particle 60.

The thickness of the third portion 63 between the first surface 63a and the second surface 63b in the particle 60 is smaller than the maximum thickness of the first portion 61 in a normal direction of the first surface 63a. The thickness of the third portion 63 between the first surface 63a and the second surface 63b is smaller than the maximum thickness of the third portion 63 in a normal direction of the second surface 63b. For example, the first surface 63a and the second surface 63b has a circular shape or an elliptical shape, and the third portion 63 has a shape of a circular plate, an elliptical plate, a cylindrical body, or an elliptical cylindrical body.

In an initial state in which a voltage is not applied to the first and second electrodes 41 and 42, a plane direction of the third portion 63 is disposed to be approximately parallel to a plane direction of the particle layer 55. Furthermore, in the initial state, the disposition of the plane direction of the third portion 63 to be approximately parallel to the plane direction of the particle layer 55 may be realized, for example, by adjusting the specific gravities of the first portion 61, the second portion 62, and the third portion 63 of the particles 60. Alternatively, the plane direction of the third portion 63 of each of the particles 60 in the particle layer 55 may be made to be approximately parallel to the plane direction of the particle layer 55 by applying a predetermined initial voltage to the first and second electrodes 41 and 42 in an initial state.

When a voltage is applied between the first and second electrodes 41 and 42, an electric field occurs between the first and second electrodes 41 and 42, and an electronic dipole moment occurs in the particle 60 due to the electric field. At this time, each of the particles 60 operates toward a position at which a vector of the dipole moment faces a direction opposite to that of a vector of the electric field. Therefore, when a voltage is applied between the first electrode 41 and the second electrode 42 and an electric field occurs in the particle sheet 50 that is located between the first electrode 41 and the second electrode 42, the particle 60 operates at the inside of the cavity 56a to take a stable posture with respect to the electric field, that is, a stable position and a stable orientation with respect to the electric field. When the voltage between the first electrode 41 and the second electrode 42 is allowed to vary, the posture of the particle 60 varies. Accordingly, an angle of the plane direction of the third portion 63 with respect to the plane direction of the particle layer 55 varies. The third portion 63 has a function of scattering or reflecting light that is incident to the first portion 61. Therefore, when the angle of the third portion 63 varies, it is possible to allow diffusion characteristics of the screen 40 to vary.

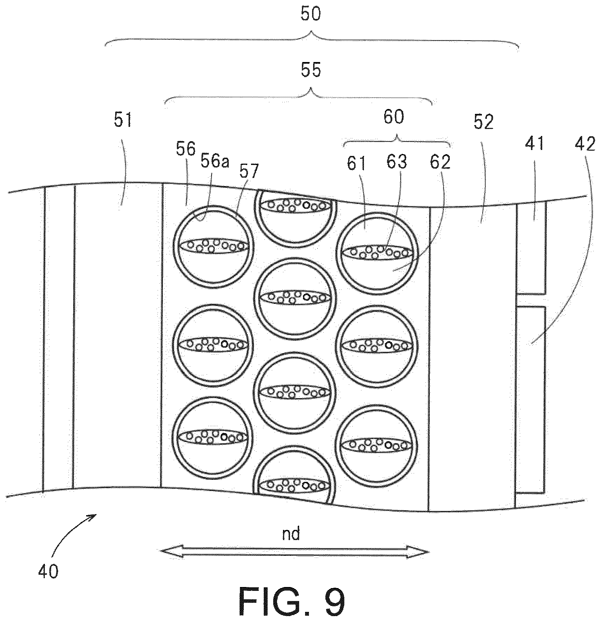

When the particles illustrated in Fig. 8 are arranged to rotate by 90° as illustrated in Fig. 9, use as a transmission screen is possible. To rotate the particles 60 as illustrated in Fig. 9, an electric field may be applied to the inside of the particle layer 55 in a direction different from the direction in Fig. 8 by 90°. For example, the first electrode 41 and the second electrode 42 are alternately disposed in a stripe shape only on a side opposite to an observer, and an electric field in a plane direction of the particle layer 55, that is, an electric field in a direction different from the direction in Fig. 8 by 90° is formed by the electrodes 41 and 42. More specifically, the electric field that is formed in the plane direction of the particle layer 55 is periodically switched by applying an AC voltage between the first electrode 41 and the second electrode 42 which are adjacent to each other in this embodiment. Accordingly, particles 60 present in the vicinity of a space between the corresponding first electrode 41 and the second electrode 42 rotate in correspondence with a frequency of the AC voltage.

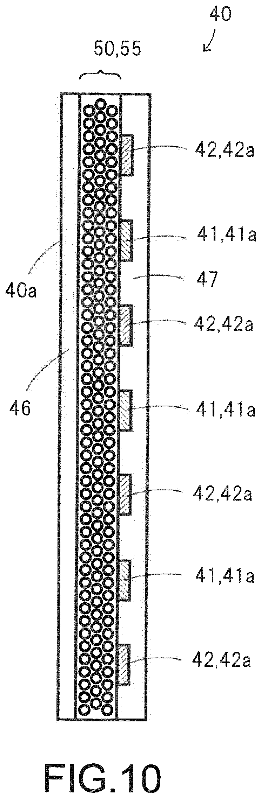

In the above-described screen, description has been given of an example in which the first electrode 41 and the second electrode 42 are formed in a plane shape, and are disposed with the particle layer 55 interposed therebetween, but there is no limitation to the example. One or more of the first electrode 41 and the second electrode 42 may be formed in a stripe shape. For example, in an example illustrated in Fig. 10, both of the first electrode 41 and the second electrode 42 are formed in a stripe shape. That is, the first electrode 41 includes a plurality of linear electrode portions 41a which extend in a linear shape, and the plurality of linear electrode portions 41a are arranged in a direction that is orthogonal to a longitudinal direction thereof. As in the first electrode 41, the second electrode 42 also includes a plurality of linear electrode portions 42a which extend in a linear shape, and the plurality of linear electrode portions 42a are also arranged in a direction that is orthogonal to a longitudinal direction thereof. In the example illustrated in Fig. 10, the plurality of linear electrode portions 41a which constitute the first electrode 41, and the plurality of linear electrode portions 42a which constitute the second electrode 42 are both arranged on a surface of the particle sheet 50 which is opposite to an observer. In addition, the plurality of linear electrode portions 41a which constitute the first electrode 41 and the plurality of linear electrode portions 42a which constitute the second electrode 42 are alternately arranged along the same arrangement direction. According to the first electrode 41 and the second electrode 42 which are illustrated in Fig. 10, it is also possible to form an electric field in the particle layer 55 of the particle sheet 50 by applying a voltage from the power source 30.

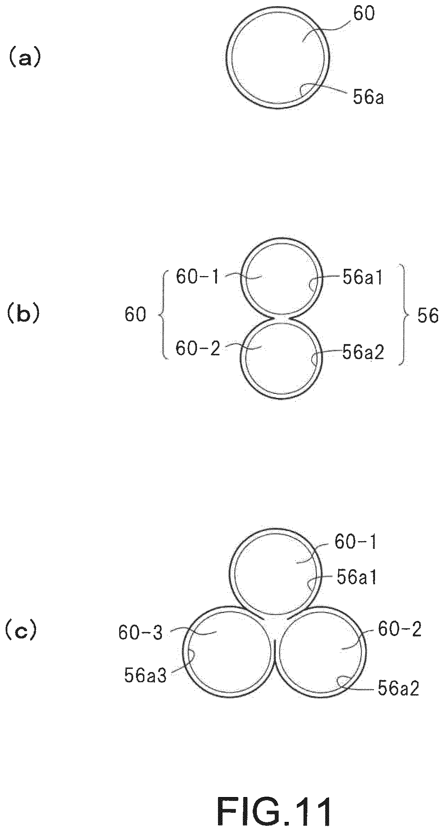

Furthermore, as illustrated in Fig. 11(a) to Fig. 11(c), the cavity 56a provided in each support portion 56 in the particle layer 55 may be configured to include a single particle 56. Fig. 11(a) illustrates a support portion 56 that includes a single particle 56 in a single cavity 56a. Fig. 11(b) illustrates a support portion 56 that includes single particles 60-1 and 60-2 in two cavities 56a1 and 56a2 which are connected, respectively. Movable ranges of the particles 60-1 and 60-2 are regulated by the corresponding cavities 56al and 56a2. Fig. 11(c) illustrates a support portion 56 that includes single particles 60-1, 60-2, and 60-3 in three cavities 56a1, 56a2, and 56a3 which are connected, respectively. Movable ranges of the particles 60-1, 60-2, and 60-3 are regulated by the corresponding cavities 56a1, 56a2, and 56a3. As described above, even when a plurality of cavities are connected to each other, when being arranged so that movable ranges of a plurality of particles do not overlap each other, it can be regarded that the cavity provided in the support portion 56 is configured to include a single particle.

In addition, an inner diameter of the cavity is not limited as long as the inner diameter is greater than an outer diameter of the particle that is included in the cavity. For example, the inner diameter of the cavity may be set to 1.1 times to 1.3 times the outer diameter of the particle that is included in the cavity.

In the above-described screens 40, the particles 60 in the particle layer 55 is caused to rotate in correspondence with an AC voltage that is applied to the electrodes in order for speckles not to be visually recognized. In contrast, the particles 60 in the particle layer 55 may be caused to move in correspondence with an AC voltage that is applied to the electrodes in order for speckles not to be visually recognized.

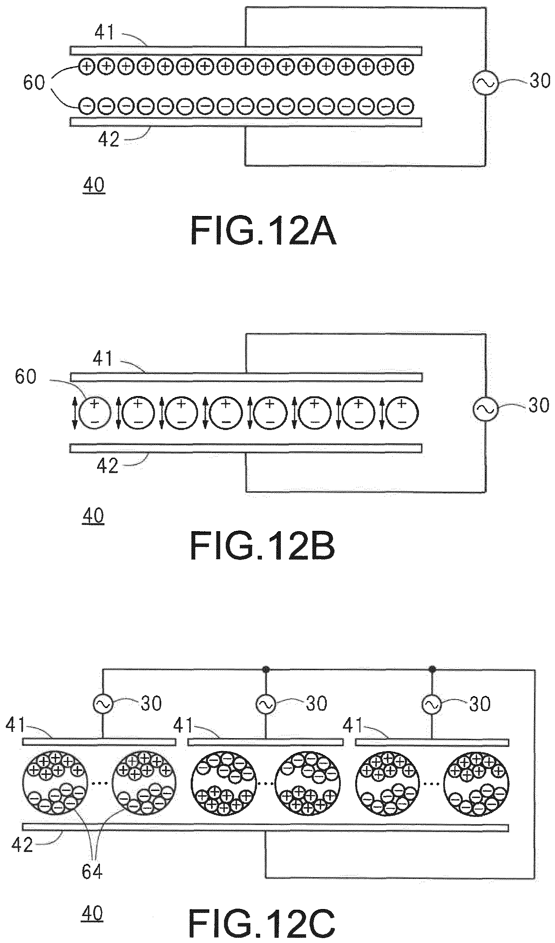

Fig. 12A and Fig. 12B are schematic views illustrating an example of an electrophoresis screen 40. The screen 40 illustrated in Fig. 12A has a structure in which two kinds of particles 60 which migrate in a solvent are hermetically sealed between two electrodes 41 and 42 which face each other. The two kinds of particles 60 are different in a polarity. An AC voltage is applied between the two electrodes 41 and 42. A particle 60 on one side moves in a direction of one electrode and a particle 60 on the other side moves in a direction of the other electrode due to application of an AC voltage. When positive and negative polarities of an AC voltage that is applied between the two electrodes 41 and 42 are reversed, the two kinds of particles 60 move to electrodes in opposite directions.

In electronic paper, two kinds of particles 60 are colored by colors different from each other, and a display color is made to vary in correspondence with movement of the particles 60, but in a case of being used as the transmission type screen 40, it is preferable that the two kinds of particles 60 are both made to be transparent. Since a movement direction of the two kinds of particles 60 varies whenever a voltage polarity of the AC voltage is changed, transmission characteristics of the screen 40 varies, and speckles are inconspicuous.

In addition, in a case where the structure in Fig. 12A is used as the reflection type screen 40, the two kinds of particles 60 may be both set, for example, to a white color. Accordingly, image light emitted to the screen 40 from the projector 20 is reflected by the particles 60. Even in the reflection type screen 40 illustrated in Fig. 12A, since the two kinds of particles 60 move whenever a voltage polarity of an AC voltage is changed, reflection characteristics in the particles 60 vary, and speckles are also inconspicuous.

Particles 60 having a dipole as illustrated in Fig. 12B may be provided instead of providing the two kinds of particles 60 which are different in a polarity as illustrated in Fig. 12A. In this case, whenever a voltage polarity of an AC voltage applied between the two electrodes 41 and 42 varies, the particles 60 vibrate. Accordingly, transmission characteristics or reflection characteristics of the screen 40 also vary, and speckles are inconspicuous.

In Fig. 12A and Fig. 12B, the particles 60 freely move between the two electrodes 41 and 42. However, in a case where an area of the electrodes is great, there is a concern that parts of the particles 60 may stop at one site. Accordingly, a pattern electrode obtained by dividing an electrode in a minute unit may be employed.

In Fig. 12A and Fig. 12B, a plurality of the particles 60 freely move between the two electrodes 41 and 42. However, as illustrated in Fig. 12C, a microcapsule 64 that accommodates two kinds of particles 60 which are different in a polarity may be provided, and a plurality of the microcapsules 64 may be disposed between the two electrodes 41 and 42. In addition, one electrode may be set to a pattern electrode to cause a direction of the particles 60 in the microcapsule 64 to vary for every electrode.

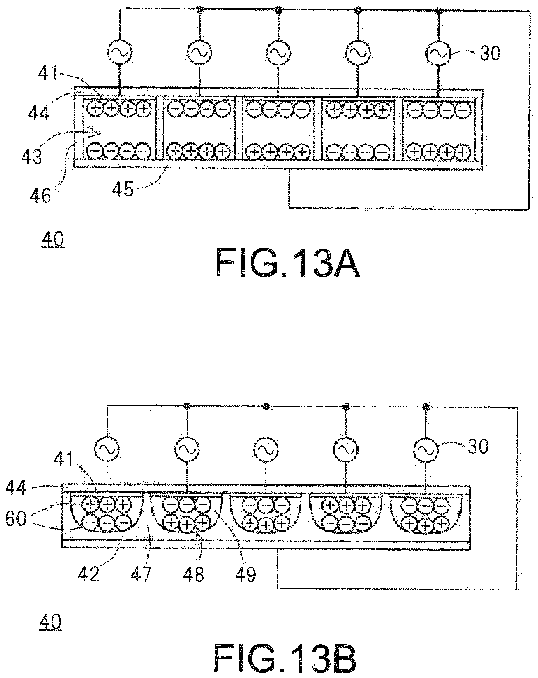

As one modification example of Fig. 12A, Fig. 12B, and Fig. 12C, as illustrated in Fig. 13A and Fig. 13B, a plurality of cell portions 43 may be provided along a sheet surface of the screen 40, and an electrode 41 may be provided for every cell portion 43 to control movement of the particles 60 for every cell portion 43. In a partition wall structure illustrated in Fig. 13A, the respective cell portions 43 are formed by two substrates 44 and 45 which face each other, and partition wall portions 46. This structure can be formed in a relatively easy manner by using photolithography or a transfer technology. The particles 60 may be accommodated or the microcapsule 64 illustrated in Fig. 12C may be accommodated in each cell portion 43.

The partition wall structure illustrated in Fig. 13B is prepared as follows. Concavities and convexities are formed in an insulating layer 47 that is disposed on one electrode 42 through a molding process, the inside of concave portions 48 is filled with the particles 60 and a solvent 49, an upper side of the resultant structure is hermetically sealed with a substrate 44 to form a microcup array. For example, when the electrode 41 is disposed for every microcup, it is possible to control movement of the particles 60 at the inside of the microcup for each microcup.

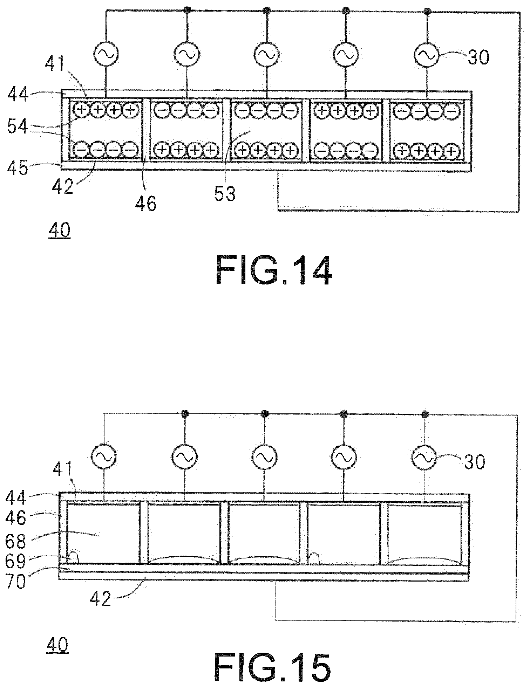

In addition, the screen 40 according to this embodiment may employ an electronic powder method in which a plurality of the particles 60 are moved in a gas instead of employing electrophoresis method in which the plurality of particles 60 are moved in a liquid medium. For example, as illustrated in Fig. 14, the respective cell portions 43 of the partition wall structure may be filled with a gas 53 and a plurality of powders 54. Here, each of the powders 54 is a substance that exhibits flowability by itself without depending on the power of a gas or the power of a liquid. That is, the powder 54 is in an intermediate state having both characteristics of a particle and a liquid, and is a substance in a specific state that is less susceptible to the gravity and exhibits high flowability. In the case of Fig. 14, for example, when electrodes are provided for every cell portion 43, it is possible to make a movement direction of the plurality of particles 60 for every cell be variable, and speckles are inconspicuous.

In addition, the screen 40 may employ an electrowetting method as illustrated in Fig. 15. In a case of Fig. 15, the respective cell portions 43 of the partition wall structure are filled with water 68 and an oil film 69, and the oil film 69 is disposed on a dielectric layer 70. A contact angle of the oil film 69 varies in correspondence with an application voltage of the electrode 41 and 42 which corresponds to each of the cell portions 43, and a surface area of the oil film 69 is variable. Accordingly, transmission characteristics or reflection characteristics of the screen 40 vary, and speckles is also less likely to be visually observed.

It is assumed that the above-described screens 40 use coherent light as the light source 21. However, even in a case where a countermeasure for speckles is not taken on the light source 21 side, there is an advantage that speckles are inconspicuous on the screens 40. Accordingly, it is assumed that each of the screens 40 described above is used for various uses. Hereinafter, a representative use aspect of the screens 40 will be described. Furthermore, the screen 40 that can be used in each use aspect as described below may have any one of the cross-sectional structures as illustrated in Fig. 3 to Fig. 15. Alternatively, the screen 40 may have a cross-sectional structure other than Fig. 3 to Fig. 15. However, it is assumed that the screen 40 that can be used in each use aspect as described below has a function of reducing speckles by causing at least one of rotation and movement of the particles 60 in the screen 40 to occur.

### (First Use Example of Screen 40)

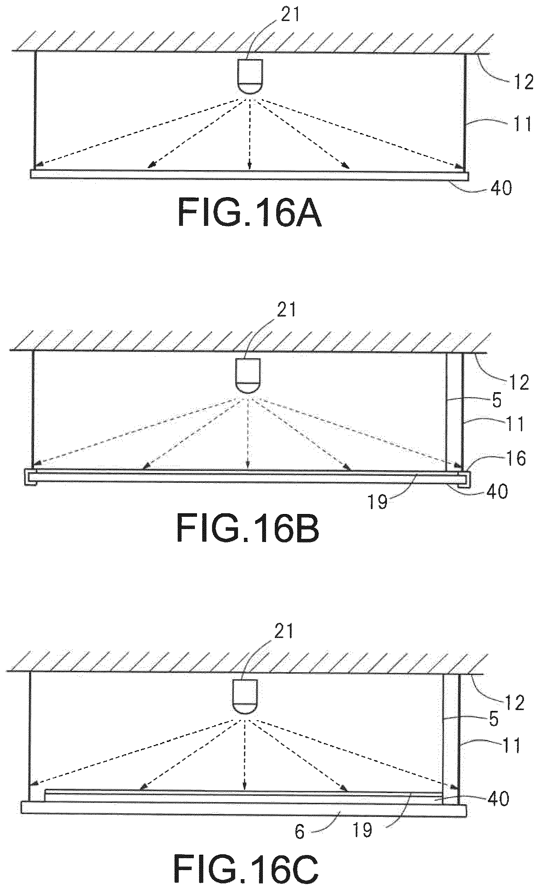

Fig. 16A, Fig. 16B, and Fig. 16C are views illustrating a first use example of the screens 40. The screens 40 illustrated in Fig. 16A, Fig. 16B, and Fig. 16C are supported to a ceiling surface 12 by a support tool 11. The light source 21 is disposed along the ceiling surface 12. More specifically, the light source 21 is directly attached to the ceiling surface 12, or supported by a support member (not illustrated) that extends from the ceiling surface 12.

The light source 21 may be disposed on an upward side in comparison to the ceiling surface 12. For example, a hole into which the light source 21 is inserted may be formed in the ceiling surface 12, and the light source 21 may be disposed in the hole. Alternatively, at least a part of the ceiling surface 12 may be set to a transparent surface, and light from the light source 21 disposed on an upward side in comparison to the ceiling surface 12 may be guided to the screen 40 after being transmitted through the transparent surface. It is considered that the light source 21 emits coherent light, but non-coherent light such as LED light may be emitted depending on cases. Hereinafter, an example in which the light source 21 emits coherent light will be described.

In addition, the light source 21 illustrated in Fig. 16A, Fig. 16B, and Fig. 16C may be the projector 20 in which the light source 21 that emits the coherent light is provided. In a case of using the screen 40 as an illumination device, only the light source 21 may be provided. However, in a case of using the screen 40 as the display device 10, image coherent light generated by the projector 20 is emitted to irradiate the screen 40.

For example, the screen 40 is a sheet member having any one of the cross-sectional structures illustrated in Fig. 3 to Fig. 15. That is, the sheet member includes a control layer that includes the plurality of particles 60 or a predetermined liquid, and an electrode that applies a voltage to the control layer to drive the plurality of particles 60 or the predetermined liquid. Here, the control layer corresponds to the particle layer 55 illustrated in Fig. 3 to Fig. 14, or the water 68 and the oil film 69 illustrated in Fig. 15. The predetermined liquid is the oil film 69 illustrated in Fig. 15.

A sheet surface of each of the screens 40 illustrated in Fig. 16A, Fig. 16B, and Fig. 16C is a flat surface. An external shape of the screens 40 illustrated in Fig. 16A, Fig. 16B, and Fig. 16C is not particularly limited, and may be a circular shape, a rectangular shape, or the other shapes. One end of the support tool 11 is connected to one or more sites of the screen 40, and the other end is connected to the ceiling surface 12. The sheet surface of each of the screens 40 illustrated in Fig. 16A, Fig. 16B, and Fig. 16C is disposed to face the ceiling surface 12. Disposing oppositely represents that the sheet surface and the ceiling surface 12 are disposed to face each other in approximately parallel or at an approximately parallel angle. To stably support the screen 40 to the ceiling surface 12 by the support tool 11, it is preferable that the support tool 11 is attached to a plurality of diagonal sites of the screen 40. The support tool 11 may be a metal fine wire or a non-metal fine wire such as a resin. In addition, the support tool 11 may be a metal or a non-metal member having a width to a certain extent instead of the fine wire.

As illustrated in Fig. 16A, Fig. 16B, and Fig. 16C, in a case of hanging the screens 40 to the ceiling, it is preferable that the screen 40 is light as much as possible. Therefore, as the material such as the first base material 51 and the second base material 52 which constitute the screen 40 as illustrated in Fig. 3, it is preferable that the weight per unit volume is light as much as possible. In addition, in a case of a light and strong material, it is possible to reduce the film thickness, and this leads to a reduction of the weight. For example, it is considered that a polyethylene terephthalate film is used as the first base material 51 or the second base material 52, and the film thickness thereof is set to 100 µm or less in consideration of a reduction in weight as an example.

The screen 40 may be formed as a thin film for a reduction in weight. However, the further the thickness is reduced, the more wrinkling or slackening is likely to occur. As a result, a peripheral edge portion of the screen 40 is likely to be wrapped up. Here, as illustrated in Fig. 16B, two opposite end surfaces of the screen 40 may be supported by a frame 16, and the support tool 11 may be attached to the frame 16 to be hung from the ceiling surface 12. In addition, the slackening of the screen 40 may be adjusted by the frame 16. Specifically, the slackening of the screen 40 may be adjusted by changing an interval of the frame 16 on both right and left ends of the screen 40.

In addition, as illustrated in Fig. 16B, an optical sheet 19 having predetermined optical characteristics may be disposed on a surface of the screen 40 on a side facing the ceiling surface 12. The optical sheet 19 adjusts transmission characteristics, scattering characteristics, and the like of light from the light source 21, and may be a Fresnel lens sheet, a prism sheet, or the like. It is not necessary for this kind of optical sheet 19 to cover the entire surface of the screen 40, and the optical sheet 19 that adjusts distribution characteristics of light from the light source 21 may be selectively disposed at a location that is separated from an irradiation optical axis of the light source 21. A countermeasure for a reduction in weight may be taken also on the optical sheet 19 by selecting a material, a film thickness, and the like.

As illustrated in Fig. 3, it is necessary to supply a voltage to the first electrode 41 and the second electrode 42 of the screen 40. In Fig. 16A, an interconnection that supplies a voltage to the screen 40 is not illustrated, but the voltage may be supplied through the support tool 11, for example. Alternatively, as illustrated in Fig. 16B, an interconnection 5 that supplies a voltage may be provided separately from the support tool 11. For example, the interconnection 5 is routed along the ceiling surface 12. Furthermore, a method of routing the interconnection 5 is arbitrary, and the interconnection 5 may be integrated with the support tool 11 as described above.

Fig. 16C illustrates an example in which a transparent support substrate 6 is disposed on a lower surface side of the screen 40. For example, the support substrate 6 is a resin flat plate having a thickness of 1 mm to 5 mm. For example, a material of the resin flat plate is an acrylic resin or polycarbonate. When the screen 40 is disposed on an upper surface of the support substrate 6, even when the thickness of the screen 40 is made to be smaller as much as possible, it is possible to suppress bending of the screen 40, and it is possible to improve flatness and rigidity of the screen 40. Alternatively, an acrylic resin layer or a polycarbonate layer which has a thickness of 1 mm to 5 mm may be disposed as a layer that constitutes the screen 40 on a surface side of the screen 40 which is opposite to the ceiling surface 12 instead of providing the support substrate 6.

In the screens 40 illustrated in Fig. 16A, Fig. 16B, and Fig. 16C, it is assumed that human beings who are on a downward side of the screen 40 look up an upward side and visually recognize the screen 40. For example, when the screen 40 illustrated in Fig. 16A, Fig. 16B, or Fig. 16C is disposed on an entire region of the ceiling surface 12, it is possible to perform spectacular image display. In addition, typically, the ceiling surface 12 is a flat surface, and an obstacle other than an illumination device does not exist on the ceiling surface 12. Therefore, when utilizing the ceiling surface 12 or the vicinity thereof as a disposition location of the screen 40, it is not necessary to consider securement of the displacement location of the screen 40.

A use object of the screens 40 illustrated in Fig. 16A, Fig. 16B, and Fig. 16C is not particularly limited. For example, an image for advertisement may be displayed, or the screens 40 may be used to display arbitrary information or may perform moving image display such as a movie.

The light source 21 illustrated in Fig. 16A, 16B, and 16C is disposed in a range of a normal direction within the sheet surface of the screen 40. Therefore, when human beings who are on a downward side of the screen 40 look up the screen 40, it is possible to visually recognize the light source 21 through the screen 40. Accordingly, there is no concern that human beings directly view the light source 21, and thus even when the light source 21 emits coherent light, eyes of the human beings are not damaged. Therefore, according to the screens 40 illustrated in Fig. 16A, Fig. 16B, and Fig. 16C, safety of the coherent light is improved.

Furthermore, in Fig. 16A, Fig. 16B, and Fig. 16C, the transmission type screen 40 is assumed. However, when light diffusion particles 60 are contained in the particle layer 55 in the screen 40 or the like to a certain extent that does not impair transmitivity, the intensity of the coherent light may be weakened, and thus safety may be further improved.

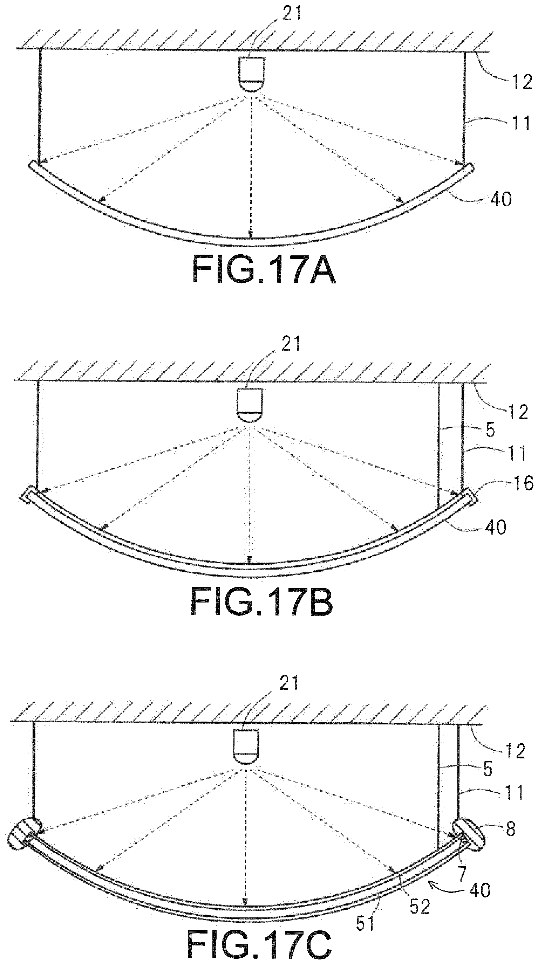

The sheet surface of each of the screens 40 illustrated in Fig. 16A, Fig. 16B, and Fig. 16C is a flat surface, but the sheet surface may be set to a curved-surface shape as illustrated in Fig. 17A, Fig. 17B, and Fig. 17C. When the sheet surface of the screen 40 is set to the curved-surface shape, a visual line direction of human beings who are on a downward side of an end side of the screen 40 is close to a normal direction of the sheet surface, and thus it is easy to view an image on the screen 40. Furthermore, in a case where the thickness of the screen 40 is small or the weight of the screen 40 is great, when the support tool 11 is attached to an edge portion of the screen 40, the central portion of the screen 40 is further hung down, and thus the curved-surface shape as illustrated in Fig. 17A, Fig. 17B, and Fig. 17C may be obtained.

As illustrated in Fig. 17A, to set the sheet surface of the screen 40 to a curved-surface shape, the screen 40 may be processed in a curved-surface shape in advance, or a flat thin film screen 40 may be deformed to a curved-surface shape when the screen 40 is hung from the ceiling by the support tool 11. The case where the flat thin film screen 40 is deformed to a curved-surface shape by the support tool 11 is realized at a lower cost, and as a material of the screen 40, for example, a resin plate such as acryl and polycarbonate, thin sheet glass, or a metal plate such as aluminum and SUS can be used. It is preferable that the thickness of the screen 40 is approximately 100 µm to 3000 µm.

As in Fig. 16B, Fig. 17B illustrates an example in which two opposite end surfaces of the screen 40 are supported by the frame 16, and the support tool 11 is attached to the frame 16 and is hung from the ceiling surface 12. In addition, Fig. 17B illustrates an example in which the interconnection 5 that supplies a voltage to the electrodes 41 and 42 of the screen 40 is provided separately from the support tool 11, but a method of routing the interconnection 5 is arbitrary, and the interconnection 5 may be integrated with the support tool 11.

In a case of setting the sheet surface of the screen 40 to a curved-surface shape, it is preferable that one base material that is disposed on a ceiling surface side between the two base materials 51 and 52 which constitute the screen 40 is made to be slightly greater than the other base material. If horizontal distances of the two base materials 51 and 52 are the same as each other, there is a concern that winkle may be formed on a surface of one base material that is disposed on the ceiling surface 12 side. Therefore, it is preferable that the horizontal distances of the two base materials 51 and 52 are adjusted in advance in correspondence with a bending degree of the sheet surface of the screen 40. Fig. 17C illustrates an example in which the horizontal distance of the first base material 51 that is disposed on a ground surface side is made to be longer than the horizontal distance of the second base material 51 that is disposed on the ceiling surface 12 side. The first base material 51 and the second base material 52 are disposed to face each other in a state of being isolated through a spacer 7, and the periphery of the spacer 7 is hermetically sealed with a sealing material 8.

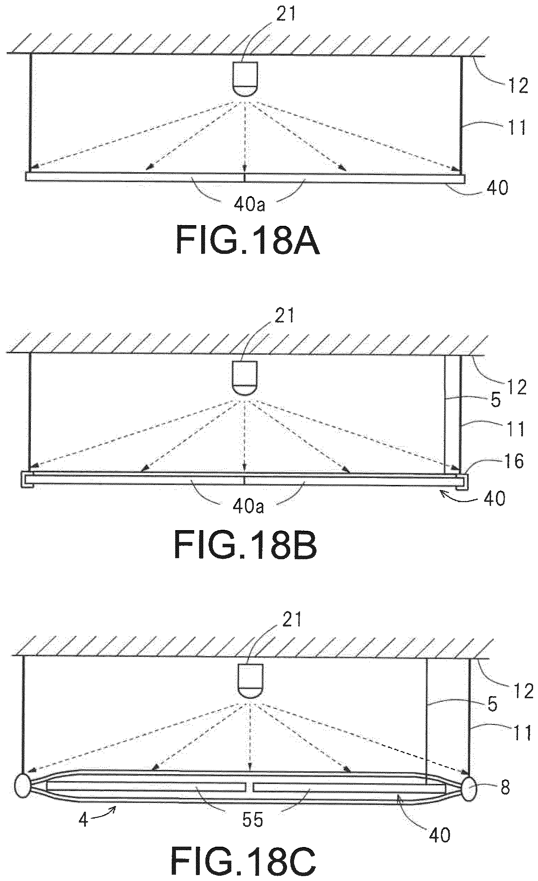

In a case where a screen size to be installed on the ceiling surface 12 is greater than a size of the sheet member for the screen 40, a screen 40 having an arbitrary size may be prepared by connecting a plurality of the sheet members 40a. Fig. 18A to Fig. 18E are views illustrating a screen 40 obtained by joining ends of two sheet members 40a disposed adjacent to each other. Fig. 18A to Fig. 18E illustrate an example in which the sheet surface of the screen 40 is a flat surface, but a curved-surface shaped screen 40 may be prepared by joining ends of the plurality of sheet members 40a. Furthermore, the number of sheets of rectangular sheet members 40a which are connected in a vertical direction or a horizontal direction is arbitrary. The screen 40 having an arbitrary size may be prepared without depending on the size of the sheet members 40a by cutting a surplus size after connecting the plurality of sheet members 40a to each other.

Fig. 18A is a view illustrating a screen 40 in which ends of two sheet members 40a are joined to each other, and the support tool 11 is attached to opposite ends and is hung from the ceiling. Fig. 18B is a view illustrating a screen 40 in which the two sheet members 40a are supported by the frame 16, and the support tool 11 is attached to the frame 16 and is hung from the ceiling.

Fig. 18C is a view illustrating a screen 40 having a structure in which a plurality of particle layers 55 including the particle layer 55 illustrated in Fig. 3 are arranged in a horizontal direction, the particle layers 55 are covered with the first base material 51 and the second base material 52, and a peripheral edge portion is hermetically sealed with the sealing material 8. In this case, the plurality of particle layers 55 have a structure that is included in a bag body 4 constituted by the first base material 51 and the second base material 52.

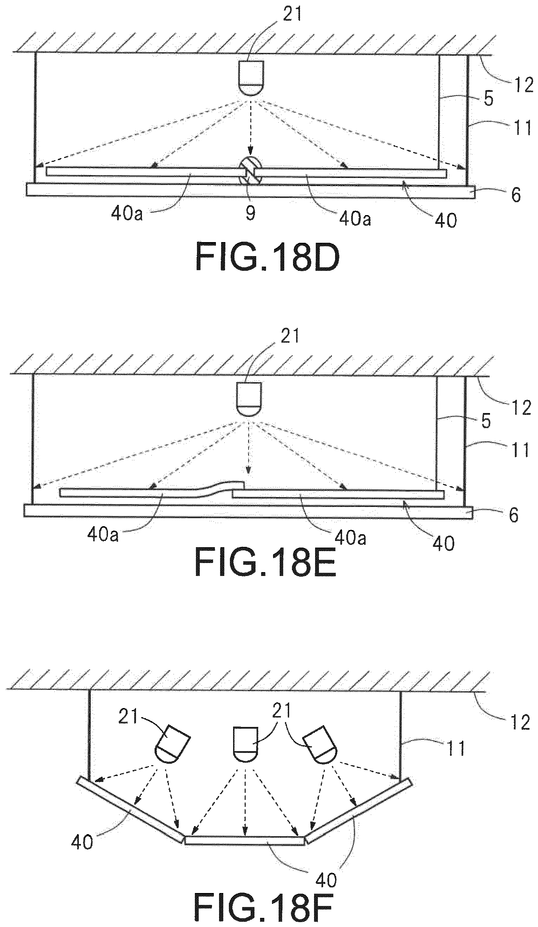

Fig. 18D is a view illustrating a screen 40 in which two sheet members 40a are disposed on a transparent support substrate 6, and ends of the sheet members 40a are joined by a light-shielding member 9. The light-shielding member 9 is disposed between the two sheet members 40a, and thus there is no concern that light is leaked from a gap between the two sheet members 40a.

Fig. 18E is a view illustrating a screen 40 in which one sheet member 40a is disposed to partially overlap the other sheet member 40a instead of using the light-shielding member 9. In this case, a gap is not formed between the two sheet members 40a, and thus it is not necessary to provide the light-shielding member 9.

Fig. 18F is a view illustrating an example in which the light source 21 is disposed in correspondence with each of a plurality of sheet members 40a. Fig. 18F illustrates an example in which three sheet members 40a are respectively disposed in directions which match irradiation optical axes of corresponding light sources 21. Here, the number of the sheet members 40a is arbitrary. In addition, arrangement directions of the sheet members 40a are also arbitrary. In addition, each of the sheet members 40a may have a flat surface or a curved surface. An arbitrary combination of flat surfaces, curved surfaces, or a flat surface and a curved surface is also possible. The same light-shielding member as in Fig. 18D may be disposed at a boundary position of adjacent sheet members 40a, or the adjacent sheet members 40a may be disposed to partially overlap each other as illustrated in Fig. 18E.

### (Second Use Example of Screen 40)

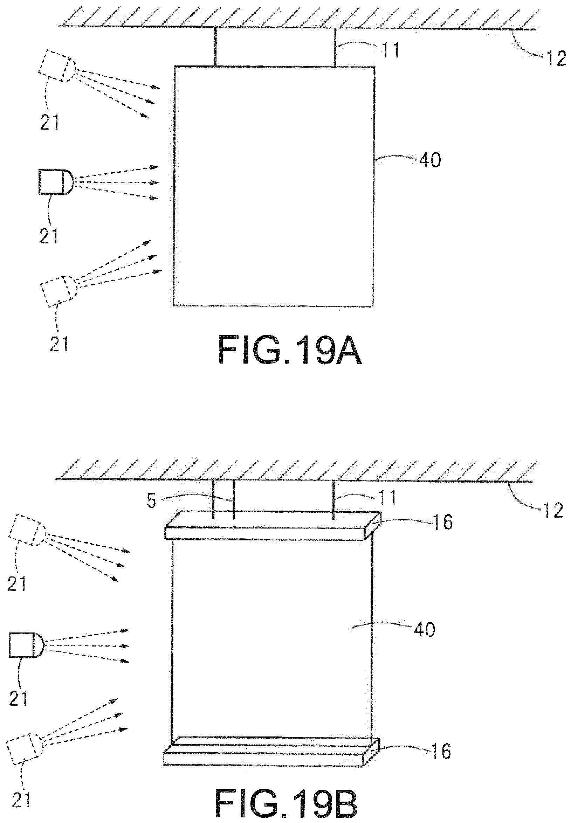

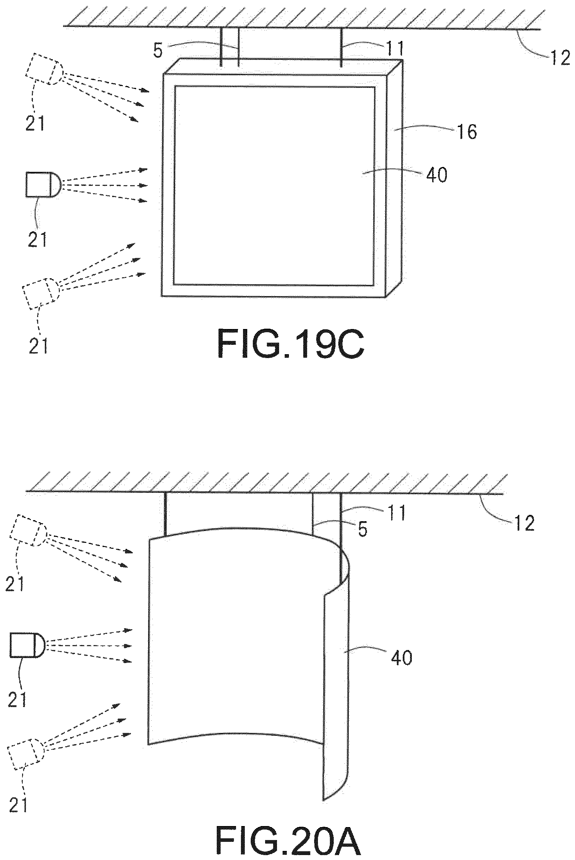

Fig. 19A, Fig. 19B, and Fig. 19C are views illustrating a second use example of the screen 40. As in the first use example, screens 40 illustrated in Fig. 19A, Fig. 19B, and Fig. 19C are supported to the ceiling surface 12 by the support tool 11. The second use example is different from the first use example in a direction of the sheet surface of the screen 40 and a position of the light source 21. In the screen 40 in the second use example, the sheet surface is disposed in a direction that is inclined from the ceiling surface 12. For example, the sheet surface of each of the screens 40 illustrated in Fig. 19A, Fig. 19B, and Fig. 19C is disposed in a normal direction of the ceiling surface 12.

Fig. 19A illustrates an example in which the support tool 11 is attached to a plurality of sites on an upper surface of the screen 40 and is hung from the ceiling. Fig. 19B illustrates an example in which the upper surface and a lower surface of the screen 40 are supported by a frame 16, and the support tool 11 is attached to the frame 16 and is hung from the ceiling. Fig. 19C illustrates an example in which a peripheral edge portion of the screen 40 is supported by the frame 16, and the support tool 11 is attached to the frame 16 and is hung from the ceiling. As illustrated in Fig. 19B or Fig. 19C, when the frame 16 is provided, it is possible to suppress winkling or distortion of the screen 40. Particularly, as illustrated in Fig. 19C, the entirety of the peripheral edge portion of the screen 40 is supported by the frame 16, winkling or distortion is prevented, and thus it is possible to stably support the screen 40 even when the screen 40 is thin. Furthermore, in Fig. 19B, the frame 16 is provided on the upper surface side and the lower surface side of the screen 40, but the frame 16 may be provided on right and left end surface sides of the screen 40 and the support tool 11 may be attached to an upper end of the frame 16.

The light source 21 in the second use example is not necessary to be disposed along the ceiling surface 12. The light source 21 of course may be disposed on the ceiling surface 12, but may be disposed along a surface in a direction different from that of the ceiling surface 12. More specifically, the light source 21 may be disposed at a position capable of irradiating the sheet surface of the screen 40 with coherent light. Therefore, a disposition location of the light source 21 does not matter as long as the entire region of the sheet surface of the screen 40 can be irradiated with coherent light. In Fig. 19A to Fig. 19C, as a candidate for the disposition location of the light source 21, a normal direction of the sheet surface of the screen 40 is indicated by a solid line, and a ceiling surface and a ground surface side are indicated by a broken line. When the light source 21 is disposed on the ground surface side, light irradiation is performed toward an obliquely upward side, and a light beam is less likely to enter eyes of an observer. Therefore, this disposition is preferable in terms of safety. In this manner, the disposition location of the light source 21 and the light irradiation direction are arbitrary.

In the screens 40 illustrated in Fig. 19A, Fig. 19B, and Fig. 19C, the support tool 11 having a fine wire shape is attached to a plurality of sites of one end of the sheet member that constitutes the screen 40, but the screen 40 may be supported to the ceiling surface 12 by a wide support tool 11.

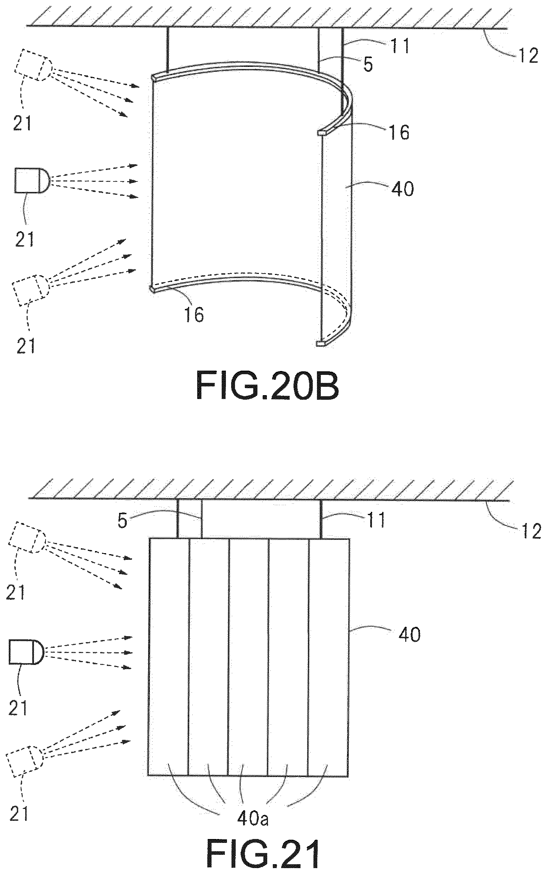

Fig. 19A, Fig. 19B, and Fig. 19C illustrate an example in which the sheet surface each of the screens 40 is a flat surface, but the sheet surface of the screen 40 may be a curved surface as illustrated in Fig. 20A and Fig. 20B. Fig. 20A illustrates an example in which the support tool 11 is attached to an upper surface of the screen 40 and is hung from the ceiling, and Fig. 20B illustrates an example in which the upper surface and a lower surface of the screen 40 are supported by the frame 16, and the support tool 11 is attached to the frame 16 and is hung from the ceiling. As in Fig. 19C, the frame 16 may support the entirety of the peripheral edge portion of the screen 40.

In a case of desiring to enlarge a screen size, as illustrated in Fig. 21, a large-sized screen 40 can be prepared by bringing a plurality of sheet members 4a into close contact with each other, and joining ends of the sheet members 40a disposed adjacent to each other. Furthermore, the frame 16 or the interconnection 5 may be attached to a structure illustrated in Fig. 21.

The screens 40 illustrated in Fig. 19 to Fig. 21 may be either a transmission type or a reflection type. As in the first use example, in a case of disposing the screen 40 to face the ceiling surface 12, the transmission type screen 40 may be used. However, in the case of the second use example, in a case of desiring to view the sheet surface from the same side as in the light source 21, the reflection type screen 40 may be used. Alternatively, in a case of desiring to view the sheet surface from a side opposite to the light source 21, the transmission type screen 40 may be used.

In Fig. 19 to Fig. 21, the disposition location of the light source 21 is fixed, but the light source 21 may be movable. For example, a light source may be mounted on a flying object such as a drone as described later, and an image may be projected to the screen 40 from a varying direction and a varying angle while moving the light source 21.

As described above, the second use example has an advantage that application to the screen 40 of any of the transmission type and the reflection type is possible.

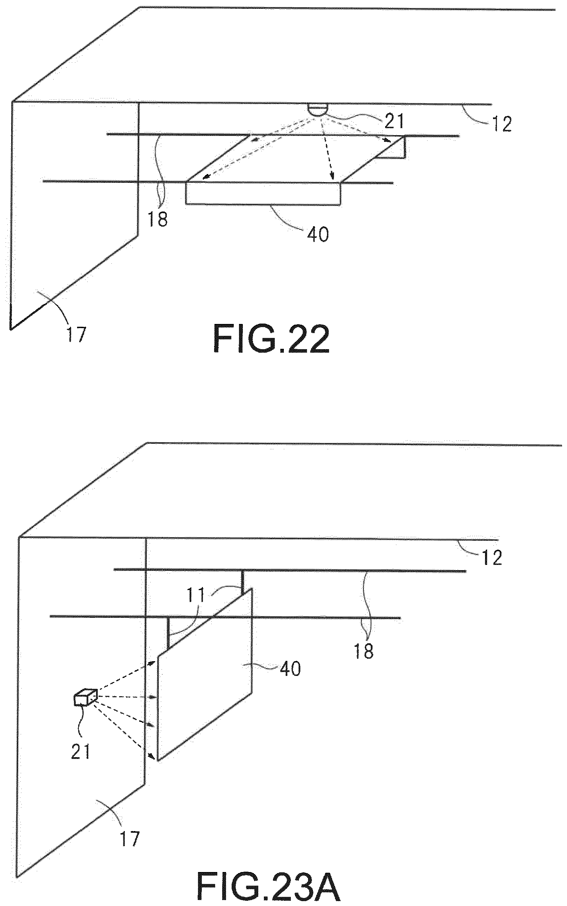

The screen 40 according to the first use example and the second use example is supported to the ceiling surface 12 by the support tool 11, but it cannot be said that a support destination is always the ceiling surface 12. For example, as illustrated in Fig. 22, the screen 40 may be disposed to be hung from a plurality of support members 18 which are attached to a surface 17 that is disposed in a direction different from that of the ceiling surface 12. In the screen 40 illustrated in Fig. 22, the sheet surface of the screen 40 is disposed to be approximately parallel to the ceiling surface 12. In the screen 40 illustrated in Fig. 22, installation and detachment of the screen 40 are easier than the case of installation to the ceiling surface 12 as illustrated in Fig. 16A, Fig. 16B, and Fig. 16C, and is appropriate for a case where it is desired to temporarily use the screen 40.

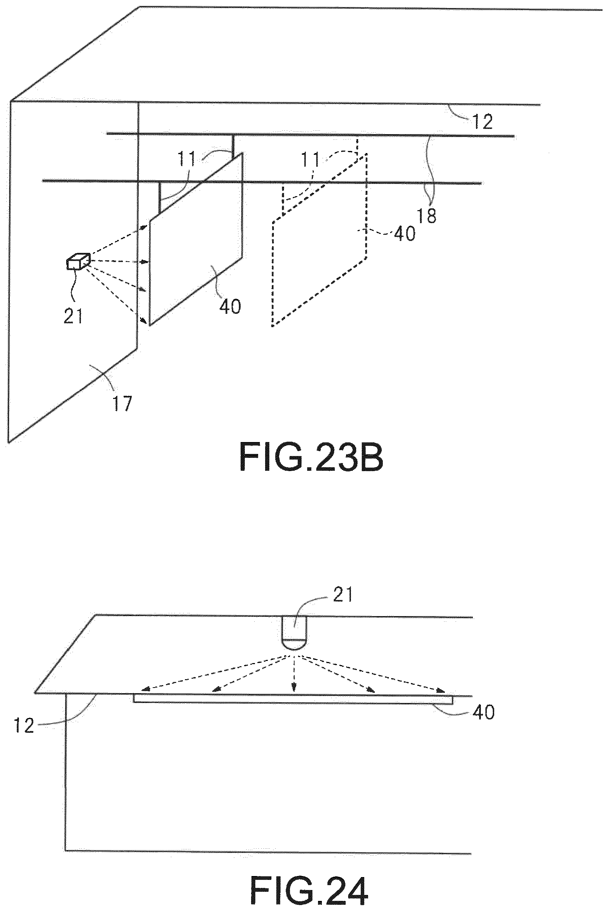

In addition, Fig. 23A and Fig. 23B illustrate an example in which the support tool 11 is attached to the same support member 18 as in Fig. 22 and the screen 40 is hung down. A sheet surface of each of screens 40 in Fig. 23A and 23B is disposed to be approximately parallel to a surface 17 that is disposed in a direction different from that of the ceiling surface 12. Fig. 23A illustrates an example in which a disposition location of the screen 40 is fixed, and Fig. 23B illustrates an example in which the screen 40 is movable along the support member 18. Although being omitted in Fig. 23A and Fig. 23B, the frame 16 may be provided in the screen 40, or the interconnection 5 may be connected to the screen 40 separately from the support tool 11. According to the screen 40 illustrated in Fig. 23A and Fig. 23B, the same use method as in the case of directly attaching the screen 40 to the surface 17 is possible.

### (Third Use Example of Screen 40)

The screens 40 according to the first use example and the second use example are supported to the ceiling surface 12 by the support tool 11, but the screen 40 may be supported without using the support tool 11.

Fig. 24 is a view illustrating an example in which the sheet surface of the screen 40 is brought into contact with the ceiling surface 12. The light source 21 is disposed on an upward side of the ceiling surface 12. In the case of Fig. 24, the sheet surface is directly joined to the ceiling surface 12 without using the support tool 11, and thus it is possible to more stably support the screen 40 in comparison to a case of using the support tool 11.

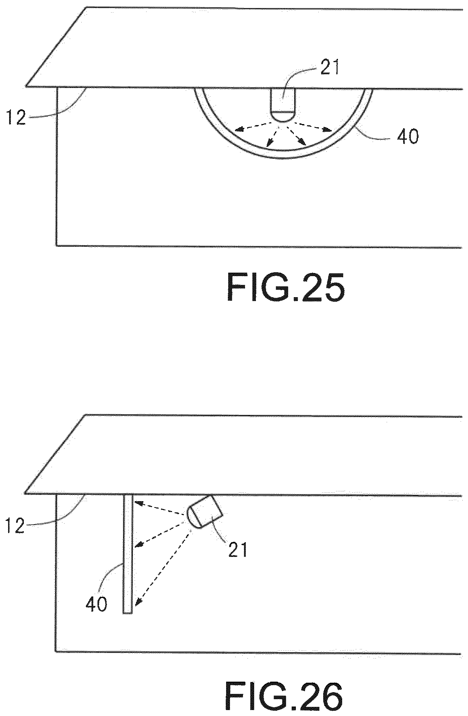

Fig. 25 is a view illustrating an example in which a curved-surface shaped screen 40 is attached to the ceiling surface 12. In a state in which a sheet member of the screen 40 is curved in a curved-surface shape, ends of the sheet member are fixed to the ceiling surface 12. For example, the light source 21 illustrated in Fig. 25 is disposed on the ceiling surface 12, or on an upward side thereof.

Fig. 26 is a view illustrating an example in which a direction of the sheet surface is made to be different by 90° from that of the screen 40 illustrated in Fig. 24. In the case of Fig. 26, one end of the sheet member of the screen 40 is joined to the ceiling surface 12, and a normal direction of the sheet surface of the screen 40 is approximately parallel to a plane direction of the ceiling surface 12.

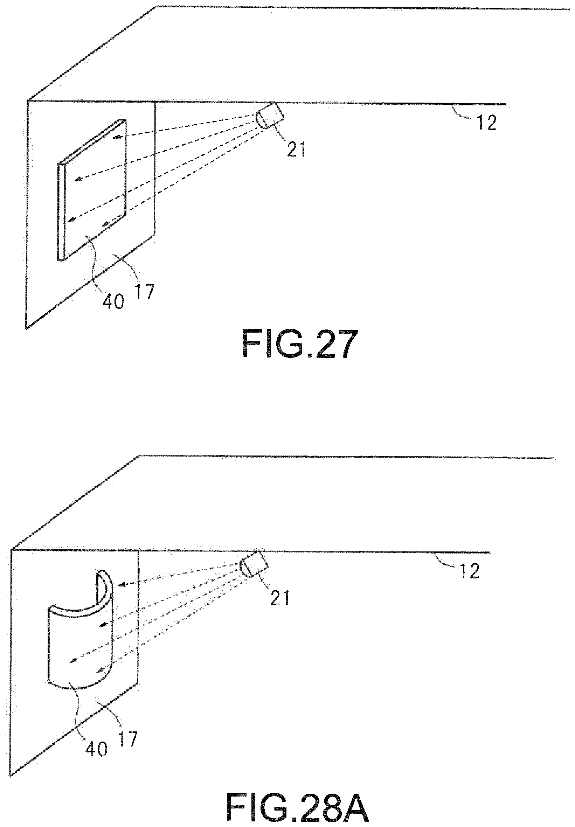

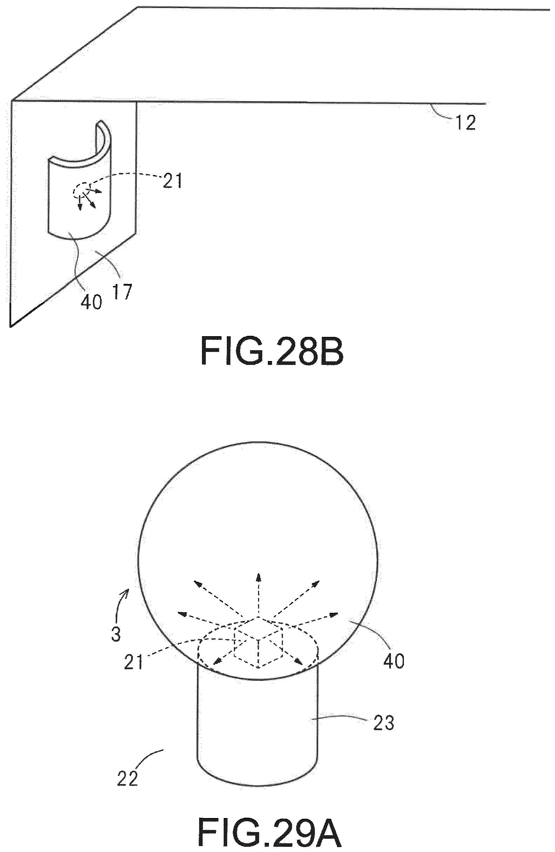

Fig. 27 is a view illustrating an example in which the sheet surface of the screen 40 is brought into contact with a surface 17 that is disposed in a direction different from that of the ceiling surface 12. Fig. 28A and Fig. 28B are views illustrating an example in which a curved-surface shaped screen 40 is attached to the surface 17. Fig. 28A and Fig. 28B illustrate an example of a reflection-type screen 40, but a transmission type screen 40 may be used in a state in which the light source 21 is disposed on the surface 17. A disposition location of the light source 21 does not matter. The light source 21 may be disposed on a convex curved-surface side of the screen 40 as illustrated in Fig. 28A, or the light source 21 may be disposed between the screen 40 and a wall surface as illustrated in Fig. 28B.

Furthermore, when mounting the screen 40 to the ceiling surface 12 or the other surface 17, a screen size may be enlarged by disposing a plurality of the sheet members 40a in a close contact manner.

As described above, in Fig. 24 to Fig. 28, the support tool 11 is not used, and the screen 40 is mounted to the ceiling surface 12 or the other surface. Therefore, it is possible to stably support the screen 40, and shaking of the screen 40 does not occur. Therefore, it is easy to view an image that is projected to the screen 40.

### (Fourth Use Example of Screen 40)

In the first to third use examples of the screen 40, the screen 40 is supported to the ceiling surface 12 or the other surface, and when installing the screen 40, a tool for attaching the support tool 11, an adhesive for joining to the ceiling surface 12 or a wall surface, and the like are necessary. Therefore, there is a problem that it takes time to install the screen 40. In contrast, in a screen 40 according to the fourth use example, the screen 40 is placed on a reference surface, and it is not assumed that the screen 40 is necessary to be stably fixed to the reference surface. However, the screen 40 may be fixed to the reference surface depending on cases.

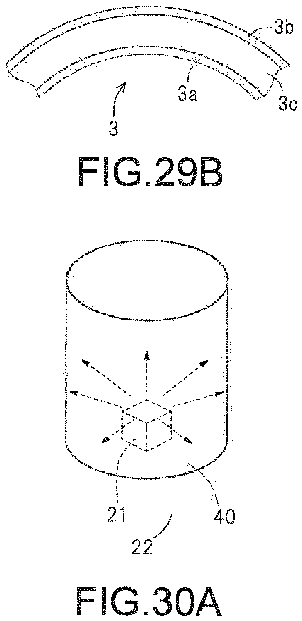

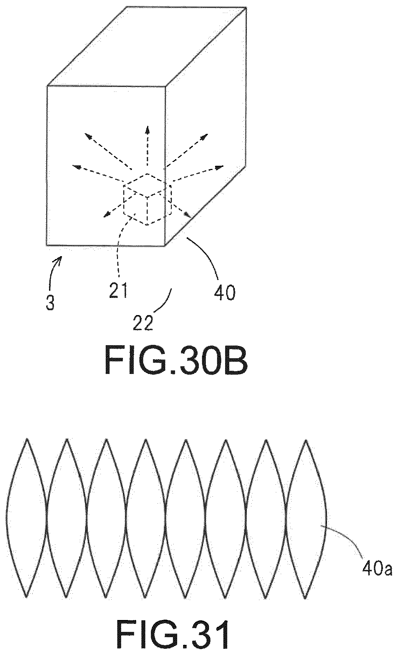

Fig. 29 and Fig. 30 are views illustrating the fourth use example of the screen 40. In both Fig. 29 and Fig. 30, the sheet member 40a of the screen 40 is disposed on a predetermined reference surface 22. Here, the reference surface 22 is a floor surface, for example. A normal direction of the floor surface is a direction of the gravity, and even when the screen 40 is placed on the floor surface without being joined thereto, the screen 40 stably stands as long as a contact area between the screen 40 and the floor surface is provided to a certain extent or more. It is assumed that a transmission type screen 40 is used in the fourth use example.

In the screen 40 illustrated in Fig. 29A, a sheet member 40a that is constituted by a hollow spherical body is disposed on a stand 23. The light source 21 is disposed on an upper surface of the stand 23, and the entire region of an inner peripheral surface of the spherical body 3 is irradiated with coherent light from the light source 21.

In Fig. 29B, the spherical body 3 is set to a three-layer structure, and a light-emitting layer 3c used as the light source 21 may be disposed between an inner layer 3a and an outer layer 3b of the spherical body 3.

Fig. 31 is a development view illustrating a method of preparing a spherical sheet member 40a. A plurality of foliate sheet members 40a are respectively curved, and are disposed in a close contact manner. More specifically, the sheet members 40a are joined so that ends of two sheet members 40a disposed adjacent to each other are flush with each other. Accordingly, it is possible to easily prepare a hollow spherical body as illustrated in Fig. 29A and Fig. 29B

In the spherical body illustrated in Fig. 29A and Fig. 29B, the light source 21 is not visually recognized directly from any direction, and thus it is possible to completely avoid a concern of directly viewing coherent light, and thus safety is improved.

In the spherical body illustrated in Fig. 29A and 29B, light from the light source 21 is visually recognized on a spherical surface, and thus the spherical body can be used as a design or art target in addition to being used for displaying arbitrary information.

Furthermore, Fig. 29A and Fig. 29B illustrate an example of the spherical body, but the shape of the screen 40 is not limited to the spherical body, and an arbitrary shape may be employed.

Fig. 30A illustrates a screen 40 that is constituted by a hollow cylindrical body. The screen 40 is formed by curving the sheet member 40a and by joining both opposite ends. Alternatively, the cylindrical body may be formed by joining ends of two sheet members, which are disposed adjacent to each other among a plurality of sheet members disposed in a close contact manner, to be flush with each other.

A light source 21 illustrated in Fig. 30A is disposed at the inside of the cylindrical body. An inner peripheral surface of the cylindrical body is irradiated with coherent light from the light source 21, and an image is displayed on an outer peripheral surface of the cylindrical body.

Also in the screen 40 illustrated in Fig. 30A, there is no concern that the coherent light from the light source 21 enters eyes of human beings as long as the human beings do not view the screen 40 from a just above side, and thus safety is improved. In addition, an opaque or semi-transparent lid may be provided on an upper surface in consideration of a case where human beings view the screen 40 from a just above side.

Fig. 30A illustrates an example of the cylindrical screen 40, but the shape of the screen 40 is arbitrary. For example, Fig. 30B illustrates an example in which the light source 21 is disposed at the inside of a cubic screen 40.

Fig. 29 and Fig. 30 illustrate an example in which the reference surface 22 is a surface such as a floor surface that is not deformed, but a surface such as a water surface that irregularly or regularly varies may be set as the reference surface 22.

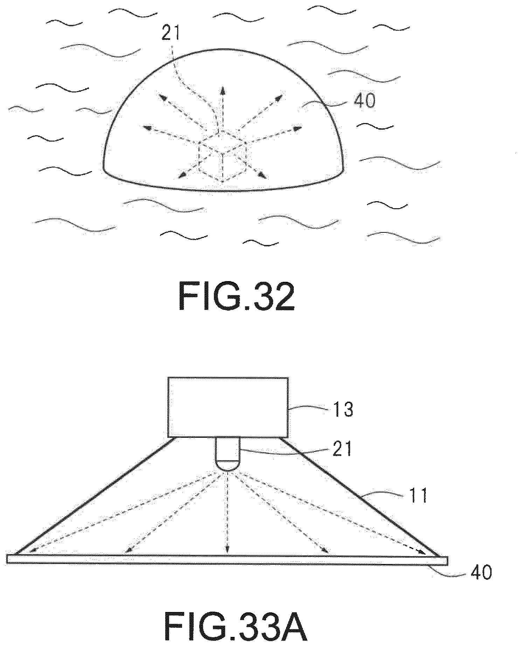

Fig. 32 illustrates an example of a screen 40 that floats on a water surface. The screen 40 illustrated in Fig. 32 includes a sheet member having a shape like an upside down bowl, and the light source 21 is disposed at the inside of the sheet member. The light source 21 also floats on the water surface. The screen 40 illustrated in Fig. 32 is also a transmission type, and an inner peripheral surface of the sheet member is irradiated with coherent light from the light source 21, and accordingly, an image is displayed on an outer peripheral surface of the sheet member.

For example, the screen 40 illustrated in Fig. 32 can be used as a buoy that floats in the sea.

### (Fifth Use Example of Screen 40)

In the first to fourth use examples of the screen 40, it is not assumed to move the screen 40 itself except for Fig. 32. In contrast, a screen 40 according to a fifth use example as described below has a floating function in the air.

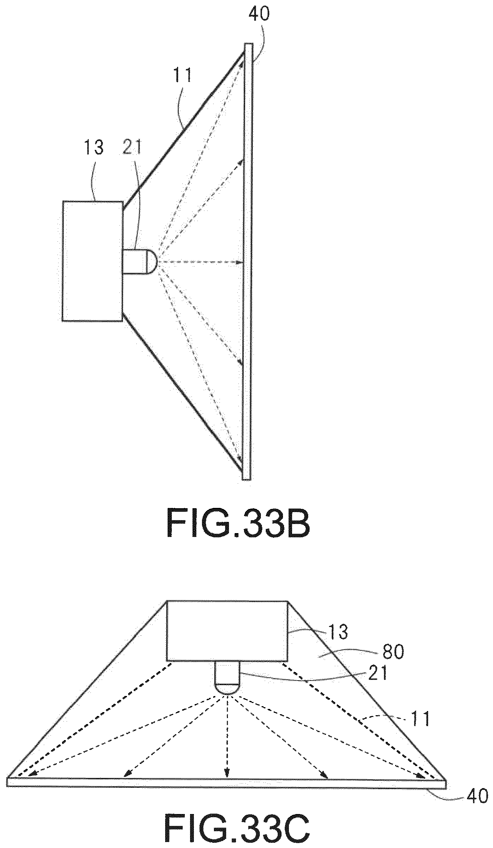

Fig. 33 to Fig. 35 are views illustrating the fifth use example of the screen 40, and illustrate a display device 10 including a flying screen 40. The display device 10 illustrated in each of Fig. 33 to Fig. 35 includes a screen 40, a drive unit 13, and a support tool 11. The screen 40 is the same screen 40 as in the first use example. The drive unit 13 generates a drive force that floats the screen 40 in a three-dimensional space. As the drive unit 13, a motor, an engine, or the like which is generally used in an unmanned flying object called a drone is applicable. One end of the support tool 11 is connected to one or more sites of the screen 40, and the other end thereof is connected to the drive unit 13 to support the screen 40 to the drive unit 13. As described above, the support tool 11 illustrated in Fig. 16A, Fig. 16B, and Fig. 16C supports the screen 40 to the ceiling surface 12. In contrast, the support tool 11 illustrated in Fig. 33 to Fig. 35 supports the screen 40 to the drive unit 13.

Although not illustrated in Fig. 33 to Fig. 35, it is preferable that blades for generating buoyancy are attached to the drive unit 13, and the blades are rotated by the drive force of the drive unit 13 to generate the buoyancy.

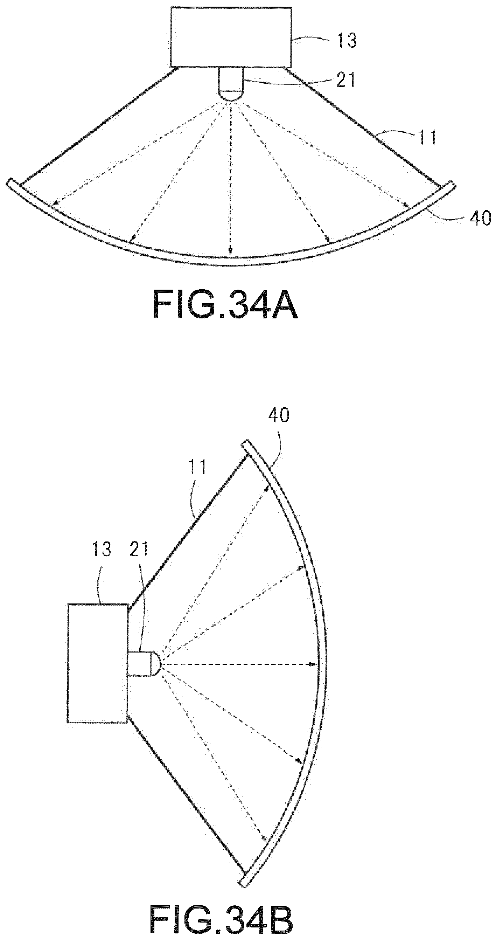

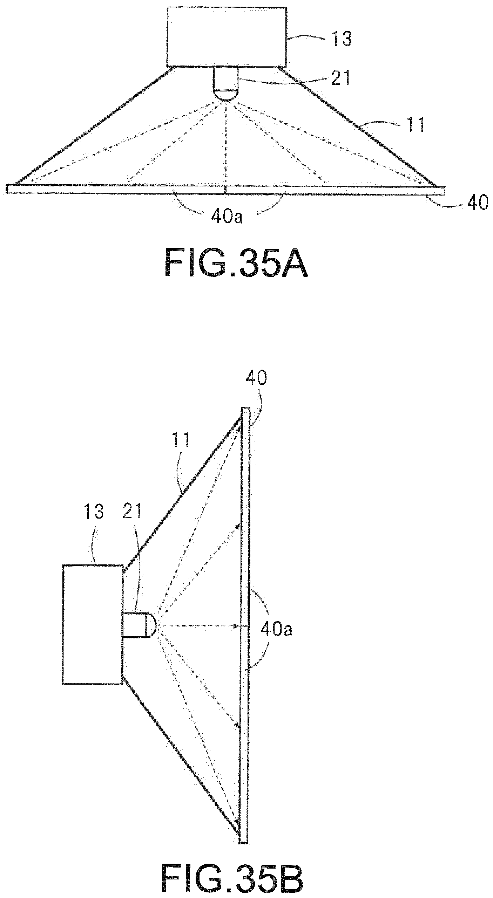

A screen 40 illustrated in Fig. 33A, Fig. 33B, and Fig. 33C has a flat surface, and a screen 40 illustrated in Fig. 34A and Fig. 34B has a curved surface. In addition, in a screen 40 illustrated in Fig. 35A and Fig. 35B, among a plurality of sheet members 40a which are disposed in a close contact manner, ends of sheet members 40a disposed adjacent to each other are joined. The screen 40 in Fig. 35 may have a flat surface or a curved surface.

Fig. 33A, Fig. 34A, and Fig. 35A illustrate an example in which the screen 40 is parallel to a horizontal surface, and Fig. 33B, Fig. 34B, and Fig. 35B illustrate an example in which the screen 40 is parallel to a vertical surface. In a case where the screen 40 is parallel to the vertical surface, the screen 40 is disposed only one side of the drive unit 13, and thus it cannot be said that balance is satisfactory. Therefore, for example, the screen 40 may be disposed on both right and left sides of the drive unit 13.

Fig. 33C illustrates an example in which a region ranging from the drive unit 13 to a peripheral edge portion of the screen 40 is covered with an opaque cover member 80. Accordingly, constituent members other than the display surface of the screen 40 are not visually recognized, and thus an appearance is improved. A painting image may be drawn on a surface of the cover member 80 to provide a decorative property.

The display device 10 illustrated in each of Fig. 33 to Fig. 35 can fly in the air, for example, in correspondence with control of a remote controller (not illustrated). Therefore, the human beings look up the flying screen 40. The screens 40 in Fig. 33 to Fig. 35 can perform information display for advertisement. Alternatively, an optical camouflage function may be provided in order for the drive unit 13, the light source 21, and the like not to be visually recognized in accordance with image display of the screen 40.

### (Function of Light Source Control unit)

As illustrated in Fig. 18A to Fig. 18E, Fig. 21, and Fig. 35, in a case of preparing a large-sized screen 40 by connecting a plurality of sheet members 40a, it is necessary to perform scanning with light from the light source 21 on a sheet surface in a two-dimensional direction as illustrated in Fig. 2. At this time, even when irradiating a joint of the sheet members 40a with coherent light, the joint cannot be used in image display. Laser light that is used to irradiate the joint may rather become a cause for occurrence of speckles. In addition, as illustrated in Fig. 2, in a case of performing scanning with coherent light regardless of existence or nonexistence of the joint, whenever the coherent light passes through the joint, power consumption of the light source 21 becomes wasteful. Particularly, the flying display device 10 as illustrated in Fig. 33 to Fig. 35 performs lighting control of the light source 21 with electric power of a battery, and thus it is necessary to reduce power consumption as much as possible. The following description relates to a configuration in which speckles are not visually recognized at a joint of the screen 40, and power consumption is also reduced as an additional effect.

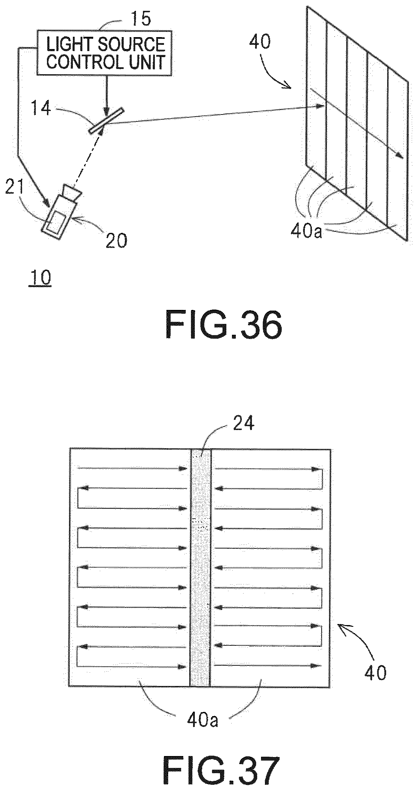

Fig. 36 is a block diagram illustrating a schematic configuration of the display device 10 including the screen 40 obtained by connecting a plurality of sheet members 40a illustrated in Fig. 18A to Fig. 18E, or the like, and Fig. 37 is a view illustrating a coherent light scanning trajectory on a sheet surface. The display device 10 illustrated in Fig. 36 includes a screen 40 obtained by connecting the plurality of sheet members 40a, a projector 20 including a light source 21, a scanning device 14 that performs scanning with the coherent light from the projector 20, and a light source control unit 15 that controls the scanning device 14. The scanning device 14 may be provided in the projector 20. In addition, the light source control unit 15 may be provided in the control device 35 illustrated in Fig. 1.

The light source control unit 15 scans the sheet surface of the screen 40 with the coherent light from the light source 21. More specifically, the light source control unit 15 performs scanning with the coherent light so that a joint 24 of two sheet members 40a disposed adjacent to each other is not irradiated with the coherent light from the light source 21. For example, the light source control unit 15 scans the sheet surface with the coherent light by making a reflection angle of the scanning device 14 be variable by using the scanning device 14 that reflects the coherent light from the light source 21. When the coherent light during scanning reaches the vicinity of the joint 24 of the sheet members 40a, the light source 21 is temporarily turned off so that wasteful power consumption does not occur in the vicinity of the joint 24 at which light cannot be effectively used. Accordingly, when scanning the vicinity of the joint 24 in Fig. 37, the light source 21 does not consume electric power, and thus it is possible to reduce power consumption of the display device 10.

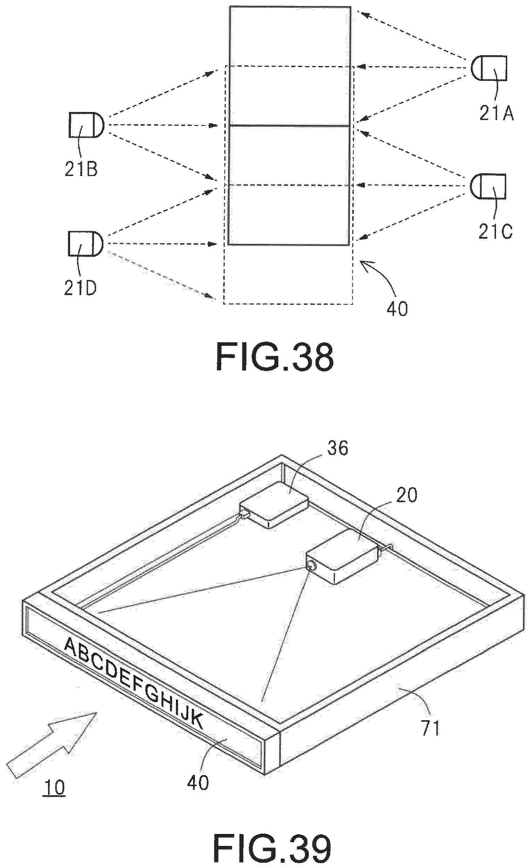

The light source control unit 15 illustrated in Fig. 36 may have an individual function. For example, as illustrated in Fig. 38, a sheet surface of one screen 40 may be irradiated by using a plurality of the light sources 21. Fig. 38 illustrates an example in which a sheet surface of a vertically long screen 40 is irradiated by using four light sources 21A, 21B, 21C, and 21D in a distribution manner. Irradiation ranges of coherent light from the light sources 21 partially overlap each other. The reason why the irradiation ranges from the light sources 21 partially overlap each other is as follows. When coherent light from one of the light sources 21 is blocked by an arbitrary obstacle, irradiation is performed with coherent light from another one of the light sources 21 in order for a non-irradiation region not to occur. Alternatively, brightness of the irradiation region is secured by performing irradiation with coherent light from the other light source 21 while suppressing an output of coherent light from the one light source 21. For example, when coherent light of the light source 21B is blocked by the obstacle, an irradiation range B with the light source 21B enters a non-irradiation state, but an upper half portion of the irradiation range B overlaps an irradiation range A of the light source 21A, and a lower half portion of the irradiation range B overlaps an irradiation range C of the light source 21C, and thus a non-irradiation range does not exist.

However, in a region in which irradiation ranges overlap each other, irradiation intensity is higher than that of a non-overlapping region. Therefore, when scanning the overlapping range, it is preferable that the light source control unit 15 weakens irradiation intensity of the light source 21. In addition, an image of the sheet surface of the screen 40 may be captured by an imaging unit such as a camera and the captured image may be analyzed to detect why irradiation with coherent light from any one of the light sources 21 is not performed. Irradiation intensity of the light source 21 may be controlled in correspondence with the detection result.

### (One Specific Example of Display Device)

A display device 10 according to one specific example includes a housing 71 having an arbitrary three-dimensional shape, and the screen 40 is disposed at least at a part of an outer surface of the housing 71. Fig. 39 is a view illustrating a state in which an upper lid of the housing 71 of the display device 10 according to the one specific example is detached. The screen 40 is disposed on a part of the outer surface of the housing 71 of the display device 10 illustrated in Fig. 39. The screen 40 has a structure as illustrated in Fig. 3, Fig. 6, Fig. 7, Fig. 8, Fig. 9, Fig. 12A, Fig. 12B, Fig. 12C, Fig. 13A, Fig. 13B, Fig. 14, or Fig. 15.

A drive device 36 in which a power source 30 and a control device 35 are provided, and a projector (projection device) 20 are provided at the inside of the housing 71 illustrated in Fig. 39. Furthermore, at least a part of the drive device 36 may be disposed on an outer side of the housing 71. In this case, it is possible to connect the drive device 36 that is disposed on an outer side and the screen 40 by an interconnection. The projector 20 includes a coherent light source 21 that emits coherent light, and a scanning device 14 that scans the screen 40 with the coherent light emitted from the coherent light source 21. The coherent light emitted from the projector 20 is so-called focus-free, and can project a clear image to the screen 40 that is installed at an arbitrary location. A projection size on the screen 40 varies in accordance with an optical path length from a light emission port of the projector 20 to the screen 40.

The screen 40 illustrated in Fig. 39 is disposed on at least a part of the outer surface of the housing 71. In the example illustrated in Fig. 39, the screen 40 is disposed on one lateral surface of the housing 71 having a rectangular parallelepiped shape. Furthermore, Fig. 39 is illustrative only, and the screen 40 may be disposed on one or more surfaces among an upper surface, a lower surface, and four lateral surfaces of the housing 71 having the rectangular parallelepiped shape. In addition, the shape of the housing 71 is arbitrary, and at least a part of an outer surface may be set to a curved surface.

In the example illustrated in Fig. 39, only the drive device 36 and the projector 20 are disposed at the inside of the housing 71, but another member may be provided in the housing 71 as necessary as described later. The power source 30 and the control device 35 in the drive device 36 may be provided in the housing 71 as individual bodies.

As the scanning device 14 in the projector 20, for example, a MEMS mirror or the like can be used. However, in the scanning device 14, there is a limitation in a range (swing angle) capable of performing scanning with the coherent light. Therefore, it is necessary to lengthen a distance between the projector 20 and the screen 40 to enlarge a screen size, and thus the depth of the housing 71 is lengthened. To reduce the depth of the housing 71 as much as possible without reducing the screen size, coherent light output from the projector 20 may be guided to the screen 40 after being reflected by an arbitrary light propagation direction changing member.

The screen 40 illustrated in Fig. 39 is a transmission type, and an observer observes the screen 40 in a direction indicated by an arrow in the drawing from an outer side of the housing 71. Furthermore, Fig. 39 is also applicable to a display device 10 including a reflection type screen 40. For example, a small-sized housing 71 capable of being mounted on eyes of human beings may be viewed from a projector 20 side, and an image reflected from the screen 40 may be observed. In this case, it is preferable that the projector 20 or the drive device 36 are disposed out of a visual field such as a downward side or an upward side of the screen 40 in order for the projector 20 or the drive device 36 not to be visually recognized. Hereinafter, as an example, description will be given of an example in which the transmission type screen 40 is used.

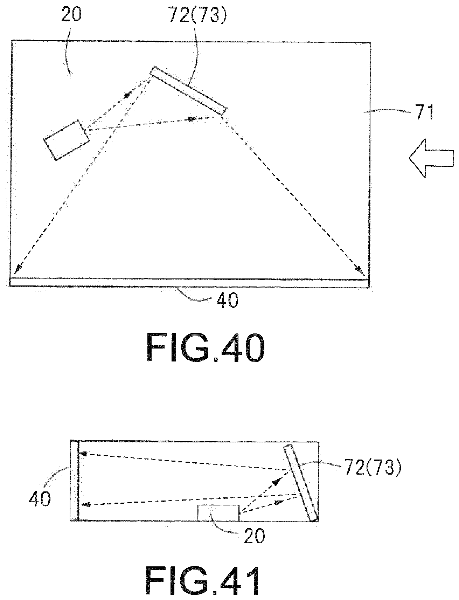

Fig. 40 is a plan view illustrating an example in which a light propagation direction changing member 73 that is constituted by, for example, a reflection mirror 72 is provided between the projector 20 and the screen 40. The reflection mirror 72 illustrated in Fig. 40 changes a propagation direction of coherent light output from the projector 20 and guides the coherent light to the screen 40. When the reflection mirror 72 as illustrated in Fig. 40 is provided, it is possible to shorten a direct distance from the projector 20 to the screen 40 without changing an optical path length from the projector 20 to the screen 40, and it is possible to shorten the depth of the housing 71. That is, when the light propagation direction changing member 73 such as the reflection mirror 72 is provided, it is possible to make the optical path length of light incident to the screen 40 at a shortest distance in the coherent light emitted from the projector 20 be longer than an inner dimension length of the depth of the housing 71.

In Fig. 40, the projector 20 may be disposed on an approximately the same plane as that of the reflection mirror 72, or the projector 20 may be disposed on an upward side, a downward side, a rightward side, or a leftward side in comparison to the mirror.

Fig. 41 is a plan view that is seen from an arrow direction in Fig. 40. Fig. 41 illustrates an example in which the projector 20 is disposed on a bottom surface side of the housing 71, and coherent light is output toward an obliquely upward side from the projector 20 and is incident to the reflection mirror 72. In this case, the coherent light reflected by the reflection mirror 72 is incident to the screen 40 after passing through an upward side of the projector 20. Therefore, the projector 20 does not block an optical path of the coherent light that propagates toward the screen 40 from the reflection mirror 72. Furthermore, the projector 20 may be disposed on an upper surface side of the housing 71, and coherent light may be output toward an obliquely downward side from the projector 20 to be incident to the reflection mirror 72.

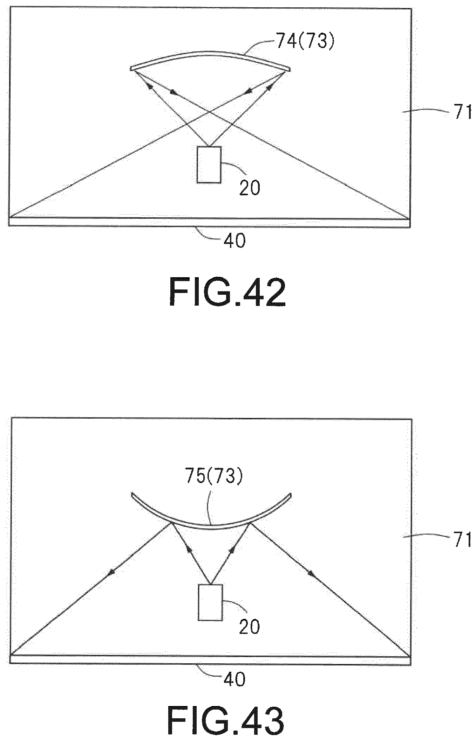

Fig. 42 is a view illustrating an example in which a concave mirror 74 is provided as the light propagation direction changing member 73, and Fig. 43 is a view illustrating an example in which a convex mirror 75 is provided as the light propagation direction changing member 73. The projector 20 is disposed between the concave mirror 74 or the convex mirror 75, and the screen 40. More specifically, the projector 20 illustrated in Fig. 42 and Fig. 43 is disposed at a position at which coherent light reflected from the concave mirror 74 or the convex mirror 75 is not blocked. More specifically, the projector 20 is disposed on an upward side, on a downward side, on a rightward side, or on a leftward side from an optical axis center direction of the convex mirror 75 or the convex mirror 75. When the concave mirror 74 or the convex mirror 75 is used as the light propagation direction changing member 73, it is possible to further enlarge a projection possible screen size while reducing a direct distance between the projector 20 and the screen 40.

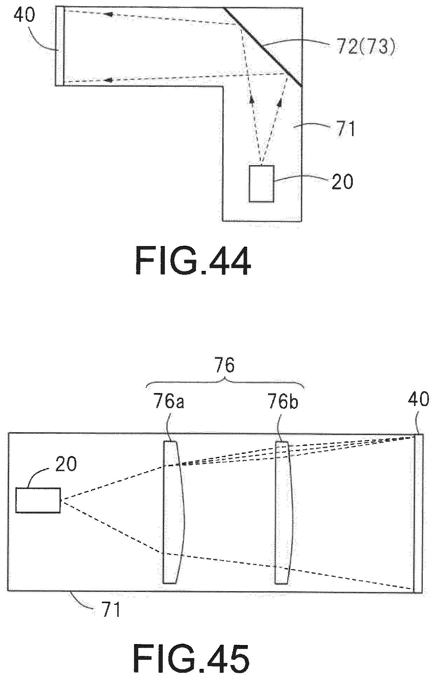

Fig. 44 illustrates an example in which coherent light output from the projector 20 is reflected, and also the housing 71 is curved or bent in correspondence with an incidence direction and an emission direction of the coherent light in the light propagation direction changing member 73. More specifically, Fig. 44 illustrates an example in which the housing 71 is set to an L-shape. In Fig. 44, the reflection mirror 72 as the light propagation direction changing member 73 is disposed at a bent corner portion. The housing 71 illustrated in Fig. 44 has a shape conforming to a propagation path of coherent light until being incident to the screen 40 after a propagation direction of the coherent light output from the projector 20 is changed by the light propagation direction changing member 73, and thus it is possible to reduce a volume of the housing 71 while securing an overall optical path length of the coherent light.

In all of Fig. 40 to Fig. 44, since coherent light output from the projector 20 is reflected by the light propagation direction changing member 73 and is guided to the screen 40, it is possible to shorten a direct distance from the projector 20 to the screen 40, and it is possible to shorten a dimension in a depth direction of the housing 71 without reducing the screen size.

The projector 20 includes the scanning device 14, and thus it is considered that coherent light is projected to a range wider than the screen size. Coherent light projected to an outer side of the screen 40 is not effectively used, and thus power is uselessly consumed. Here, Fig. 45 illustrates an example in which an optical system 76 that allows a projection range of coherent light output from the projector 20 to match the screen size is provided. The optical system 76 controls a diffusion range of the coherent light output from a projection device.

Fig. 45 illustrates an example of the optical system 76 including a first cylindrical lens 76a and a second cylindrical lens 76b which are disposed to be separated from each other in an optical axis direction. The first cylindrical lens 76a and the second cylindrical lens 76b reduce a projection range of coherent light output from the projector 20. In addition, the second cylindrical lens 76b adjusts a beam diameter size of coherent light that passes through the first cylindrical lens 76a. Accordingly, coherent can be projected to a range that matches a vertical size of the screen 40, for example. Therefore, the coherent light output from the projector 20 can be effectively used as much as possible, and an improvement of luminance and contrast is realized.

As described above, a range capable of performing scanning with coherent light by the projector 20 is limited depending on the kind of the scanning device 14, and a direct distance between the projector 20 and the screen 40 may be limited depending on a depth size of the housing 71. Description has been given of an example in which the light propagation direction changing member 73 is provided between the projector 20 and the screen 40 to reduce a depth size of the housing 71, but it is also possible to enlarge a projection range of the coherent light without enlarging the depth size of the housing 71 by providing a plurality of projectors 20.

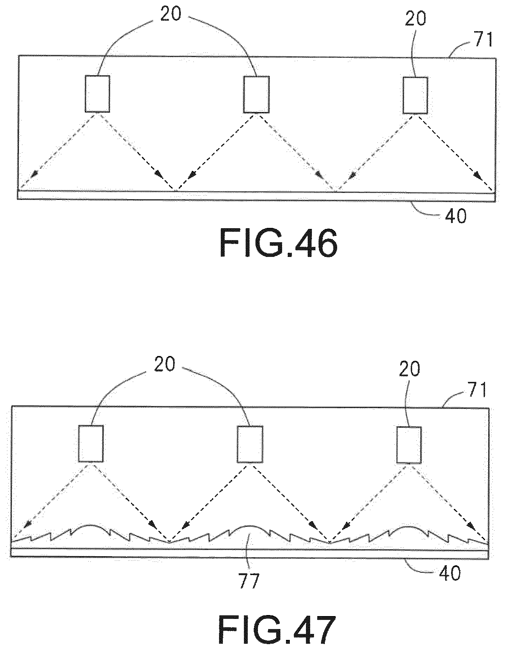

Fig. 46 includes a plurality of projectors 20 which respectively project coherent light to regions different from each other on the screen 40. Fig. 46 illustrates an example in which three projectors 20 are disposed, but the number of the projectors 20 is not particularly limited.

In Fig. 46, it is preferable to adjust a scanning range of the scanning device 14 in each of the projectors 20 so that a boundary position of projection ranges of two projectors 20 adjacent to each other is not visually recognized to an observer. In addition, image data that is projected by each of the projectors 20 may be adjusted so that an image does not become discontinuous in the vicinity of the boundary position. In addition, in a case of performing scanning with coherent light by using the scanning device 14, luminance becomes the maximum in the vicinity of the center of a projection range, and luminance becomes the minimum at an end side of the projection range. Therefore, the boundary position of projection ranges of the projectors 20 is likely to be conspicuous. Accordingly, it is preferable to variably control an output of each of the projectors 20 in conformity to a scanning direction of the coherent light. Specifically, with regard to the output of the projectors 20, in a state in which the vicinity of the boundary of the projection ranges of the projectors 20 is set as a reference, as it approaches the center of each of the projection ranges, it is preferable to control the output of the projector 20 to be lowered to make illuminance be uniform over the entire region of the projection region.

Fig. 47 is a modification example of Fig. 46 and illustrates an example in which a Fresnel lens (parallelizing optical system) 77 is disposed on a front surface of the screen 40. The Fresnel lens 77 can suppress a decrease in luminance in the vicinity of the boundary position of the projection ranges of the projectors 20 to parallelize a plurality of beams of coherent light output from the plurality of projectors 20.

Fig. 46 and Fig. 47 illustrate an example in which the plurality of projectors 20 are provided instead of providing the light propagation direction changing member, but the light propagation direction changing member and the plurality of projectors 20 may be used in combination.

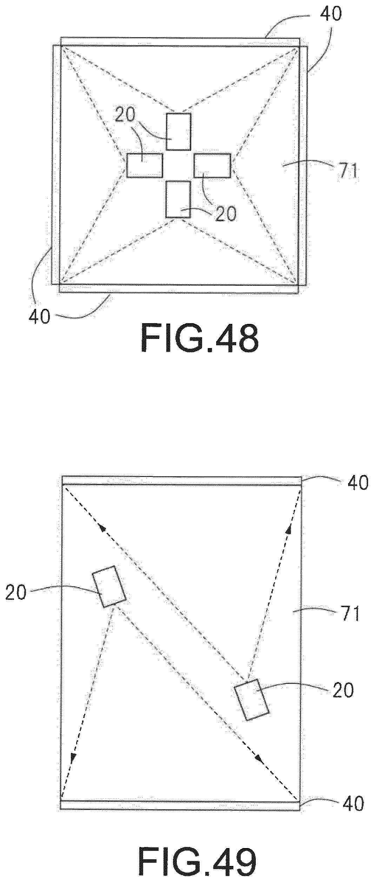

Fig. 46 and Fig. 47 illustrate an example in which one screen 40 is projected by the plurality of projectors 20, but a plurality of the screens 40 may be projected by the plurality of projectors 20. Fig. 48 is a view illustrating an example in which the screen 40 is disposed on four lateral surfaces of the housing 71 having a rectangular parallelepiped shape, and each of the screens 40 is projected by an individual projector 20. Each of the projectors 20 is disposed at a position at which coherent light output from another projector 20 is not blocked, that is, at a position different from an optical path of the coherent light from the other projector 20. In Fig. 48, four projectors 20 are disposed in the vicinity of the center of the housing 71, and projection of a corresponding screen 40 is performed by each of the projectors 20.

Fig. 49 illustrates an example in which the screen 40 is disposed on two opposite lateral surfaces of the housing 71 having a rectangular parallelepiped shape, and each of the screens 40 is projected by an individual projector 20. A plurality of the projectors 20 are disposed to deviate from each other in the housing 71 so that one projector 20 does not block coherent light from the other projectors 20. That is, each of the projectors 20 is disposed at a location different from an optical path of coherent light from another projector 20.

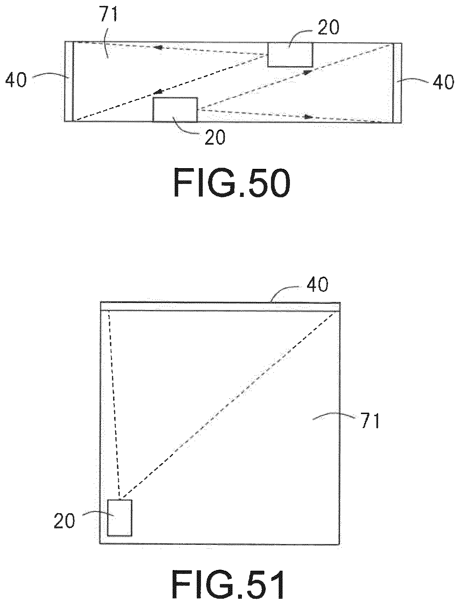

Fig. 50 is a modification example of Fig. 49. In Fig. 49, projection ranges of two projectors 20 do not overlap each other when viewed from an upward side or a downward side of the housing 71. In contrast, in Fig. 50, projection ranges of two projectors 20 do not overlap each other when viewed from a lateral surface direction of the housing 71. Therefore, in the case of Fig. 50, the two projectors 20 may be disposed to vertically overlap each other. In addition, in the case of Fig. 49, the two projectors 20 may be disposed to overlap each other when viewed from a lateral surface direction.

Typically, the projectors 20 are disposed in a normal direction of a vertically central line of the screen 40. However, in Fig. 49, projection is performed with respect to two screens 40 which are disposed on two opposite lateral surfaces of the housing 71, and thus the two projectors 20 are disposed to deviate from the normal direction of the vertical central line of the screen 40. Even when the projectors 20 are disposed at the positions, in a case where illuminance can be adjusted in correspondence with a propagation direction of coherent light output from each of the projectors 20, it is possible to make luminance be uniform over the entire region of the screen 40.

Fig. 51 illustrates an example in which coherent light is projected from a projector 20 that is disposed in a state of being biased in the housing 71 with respect to a screen 40 that is disposed on one lateral surface of the housing 71. Fig. 51 illustrates a configuration that is equivalent to a configuration including one set between the two sets of screens 40 and projectors 20 in Fig. 50. Even in the case of Fig. 50, when illuminance of coherent light is adjusted in correspondence with a propagation direction of coherent light from the projector 20, it is possible to make illuminance be uniform over the entire region of the screen 40.

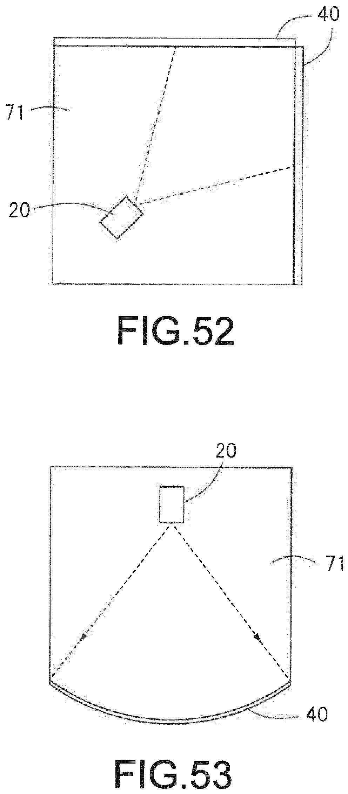

Fig. 52 is a view illustrating an example of the display device 10 that projects coherent light from one projector 20 to two screens 40 which are disposed on two lateral surfaces in the housing 71 having a rectangular parallelepiped shape. The projector 20 according to this embodiment is focus-free, and thus it is possible to project a focused image with respect to a plurality of screens 40 which are different in a direct distance from the projector 20. In the case of Fig. 52, the two screens 40 are disposed to be approximately orthogonal to each other, but it is possible to project an image with high contrast with respect to any of the screens 40.

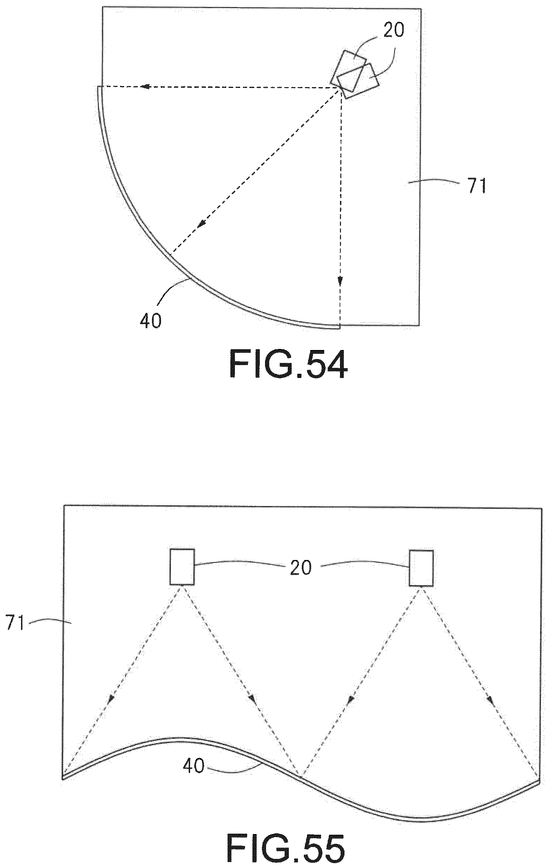

In Fig. 36 to Fig. 52, an example in which the screen 40 has a planar shape has been described, but the screen 40 may be an arbitrary curved-surface shape. Fig. 53 illustrates an example in which projection is performed to a curved-surface shaped screen 40 from a single projector 20, and Fig. 54 illustrates an example in which projection is performed to a curved-surface shaped screen 40 from two projectors 20.

In a case where a curved surface is an arc surface, when a projector 20 is disposed at a central position of the arc surface, distances to arbitrary positions on the arc surface become the same as each other, and thus even when illuminance on the projector 20 side is not adjusted in conformity to a scanning direction, it is possible to make luminance on the screen 40 be uniform.

Furthermore, the curved-surface shape of the screen 40 is arbitrary, and may be a curved-surface shape having a plurality of inflection points as illustrated in Fig. 55. Fig. 55 illustrates an example in which the projector 20 is separately disposed for every curved-surface shape including each inflection point. In this embodiment, a focus-free projector 20 is used, and thus even if the surface of the screen 40 is set to a free curved surface as illustrated in Fig. 55, it is possible to project a clear image over the entire region of the screen 40.

In Fig. 54 and Fig. 55, it is preferable that projection ranges of respective projectors 20 are disposed on the screen 40 without a gap. For such disposition, it is preferable to control the scanning ranges of the projectors 20 and to perform control on the projector 20 side so that pieces of image data which are projected by the projectors 20 are not discontinuous.

As described above, in the display device 10 illustrated in each of Fig. 39 to Fig. 55, since the screen 40 as illustrated in Fig. 3 or the like is disposed at least on a part of an outer surface of the housing 71, and each of the projectors 20 is disposed at the inside of the housing 71, it is possible to visually recognize the screen 40 with excellent contrast from an outer side of the housing 71. In the display devices 10 as illustrated in Fig. 39 to Fig. 55, since the screen 40 is scanned with coherent light to perform image display of the screen 40, it is possible to further broaden a visual field angle in comparison to a liquid crystal panel, and even in a case where the screen 40 is observed from an oblique direction, there is no concern that contrast deteriorates or a color tone varies. In addition, since a countermeasure for speckles is taken on the screen 40 as described above, even when the screen 40 is scanned with coherent light, speckles are less likely to be visually recognized.

In addition, in a case of a projector that uses a micro-display, typically, an aspect ratio of a micro-display panel has been determined, and thus to perform image display with an arbitrary size, it is necessary to electrically or mechanically shield a partial pixel area of the panel. The shielded pixel area uselessly consumes electric power, and thus power saving is not realized. In contrast, in the display device 10 illustrated in each of Fig. 39 to Fig. 55, the scanning range of the coherent light can be adjusted by the scanning device 14 in the projector 20, and thus it is possible to project the coherent light in conformity to a screen size, and thus low power consumption is attained.

In addition, in the display device 10 illustrated in each of Fig. 40 to Fig. 44, since the light propagation direction changing member 73 is provided at the inside of the housing 71, it is possible to shorten a direct distance from the light emission port of the projector 20 to the screen 40, and it is possible to reduce a depth length of the housing 71. As a result, it is possible to realize a reduction in size of the housing 71.

In addition, in the display device 10 illustrated in Fig. 45, since the optical system 76 is provided at the inside of the housing 71, it is possible to limit a projection range in conformity to at least one of a vertical size and a horizontal size of the screen 40, it is possible to improve use efficiency of coherent light output from the projector 20, and an improvement of luminance and contrast is realized.

In addition, in the display device 10 illustrated in each of Fig. 46 and Fig. 47, since the plurality of projectors 20 are provided at the inside of the housing 71, even when a screen size is large, each of the projectors 20 performs partial projection in a distribution manner. As a result, it is possible to project the entire region of the screen 40.

In addition, in the display device 10 illustrated in each of Fig. 48 to Fig. 50, since the plurality of projectors 20 are provided at the inside of the housing 71, and each of the projectors 20 is disposed so as not to block coherent light from another projector 20, it is possible to project the screen 40 that is provided in a plurality of lateral surfaces of the housing 71 with the projectors 20.

In addition, in the display devices 10 as illustrated in each of Fig. 50 and Fig. 51, even in a case where the projector 20 is disposed to be biased at the inside of the housing 71, it is possible to project the screen 40 provided at an arbitrary location with uniform contrast by adjusting a scanning range or illuminance of the projector 20.

In addition, in the display device 10 illustrated in Fig. 52, it is possible to perform projection with respect to the screen 40 provided at a plurality of lateral surfaces of the housing 71 with a single projector 20.

In addition, in the display device 10 illustrated in each of Fig. 53 to Fig. 55, even when the screen 40 provided on an outer surface of the housing 71 has a curved surface, it is possible to display a clear image over the entire region of the screen 40.

Among the display devices 10 illustrated in Fig. 39 to Fig. 55, in the display device 10 illustrated in Fig. 44, when an observer views the screen 40 from a front direction of the screen 40, there is no concern that the projector 20 is visually recognized. However, in the other display devices 10, a shadow of the projector 20 may be visually recognized through the transmission type screen 40. Generally, in the screen 40, an edge portion 40b that cannot be used as a projection region is provided on a peripheral edge side. The edge portion 40b is used as a mounting region of a circuit pattern or a circuit component that applies a voltage to the screen 40, or the edge portion 40b is provided to support the screen 40. The edge portion 40b is constituted by a member such as a resin through which visible light is not transmitted in many cases. Therefore, when the projector 20 is disposed at a position that overlaps the edge portion 40b, that is, on a rear surface of the edge portion 40b when viewed from an observer, the projector 20 is not visually recognized to the observer, and thus it is easy to view display of the screen 40.

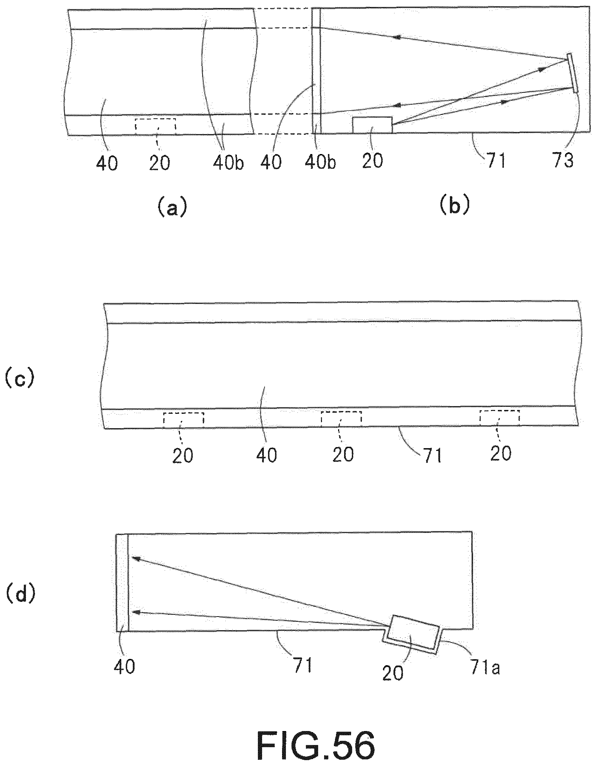

Fig. 56(a) is a view when the screen 40 is viewed from a front direction, and Fig. 56(b) is a side view of the display device 10. As illustrated in Fig. 56(b), in the display device 10 illustrated in Fig. 56(b), coherent light emitted from the projector 20 is reflected by the light propagation direction changing member 73 such as a reflection mirror, and is incident to the screen 40. The projector 20 is disposed on a bottom surface of the housing 71, and more specifically, at a position that overlaps the edge portion 40b of the screen 40 when the screen 40 is viewed from the front direction as illustrated in Fig. 56(a). Coherent light reflected by the light propagation direction changing member 73 propagates in a direction closer to a normal direction of a sheet surface of the screen 40, and is incident to a projection region. Therefore, deformation of a projection image hardly appears.

Fig. 56(c) is a view illustrating an example in which a plurality of the projectors 20 are disposed at the inside of the housing 71. The plurality of projectors 20 are disposed on the same surface (for example, a bottom surface) in the housing 71, and thus when the screen 40 is viewed from a front direction, the projectors 20 are hidden by the edge portion 40b of the screen 40, and are not visually recognized to an observer.

Furthermore, in a case where the width of the edge portion 40b of the screen 40 is narrower than the height of the projector 20, and the like, as illustrated in Fig. 56(d), a concave portion 71a may be formed in the bottom surface of the housing 71, and the projector 20 may be provided in the concave portion in order for the projector 20 not to be visually recognized when the screen 40 is viewed from a front direction. Furthermore, a shape of the concave portion 71a is not limited to the shape illustrated in Fig. 56(d).

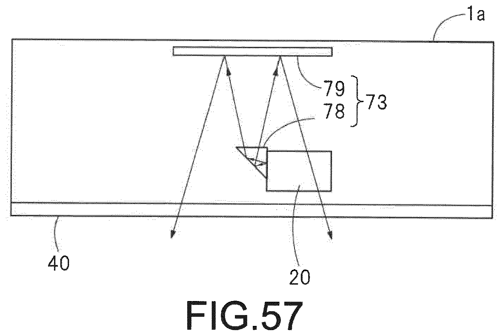

To enlarge a projection area of the screen 40, it is necessary to lengthen an optical path length until coherent light emitted from the projector 20 reaches the screen 40. However, in a case where the screen 40 is disposed on a front surface of the housing 71 as illustrated in Fig. 39, it may be difficult to lengthen a depth length of the housing 71 due to various circumstances. In this case, the reflection mirror 72 illustrated in Fig. 40 or the like may be provided, or a projection axis direction of the projector 20 may be set to be approximately parallel to a projection surface direction of the screen 40 as illustrated in Fig. 57. In addition, the light propagation direction changing member 73 may be disposed along a projection surface of the projector 20, a propagation direction of coherent light may be changed by the light propagation direction changing member, and then the coherent light may be incident to the screen 40.

In the example illustrated in Fig. 57, as the light propagation direction changing member 73, a prism 78 and a reflection mirror 79 are provided. The prism 78 is disposed along a projection surface of the projector 20, and coherent light emitted from the projector 20 is reflected from a plane of the prism 78, and is incident to the reflection mirror 79. The reflection mirror 79 reflects incident light from the prism 78 and guides the light to the screen 40. For example, the prism 78 illustrated in Fig. 57 is disposed on the bottom surface of the housing 71 as is the case of the projector 20 that is disposed on the bottom surface of the housing 71 as illustrated in Fig. 56(b). A coating may be formed on a reflection plane of the prism 78 to raise reflectance, or the coating may not be formed. In a case where the coating is not formed, the reflection plane reflects incident light through total reflection or Fresnel reflection.

As illustrated in Fig. 57, when the prism 78 and the reflection mirror 79 are provided, it is possible to lengthen an optical path length until coherent light emitted from the projector 20 is incident to the screen 40, and it is possible to enlarge a projection area of the screen 40.

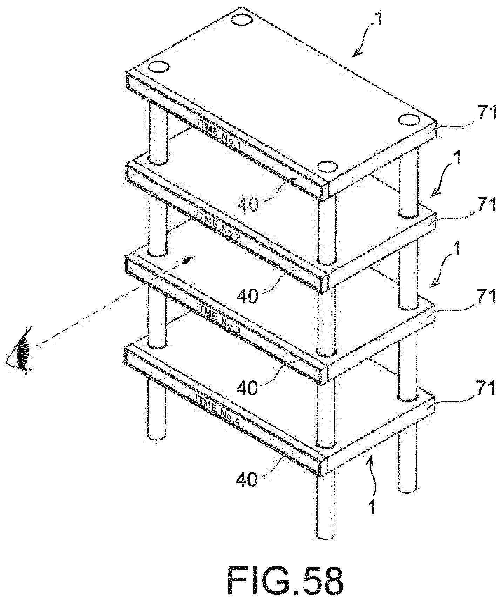

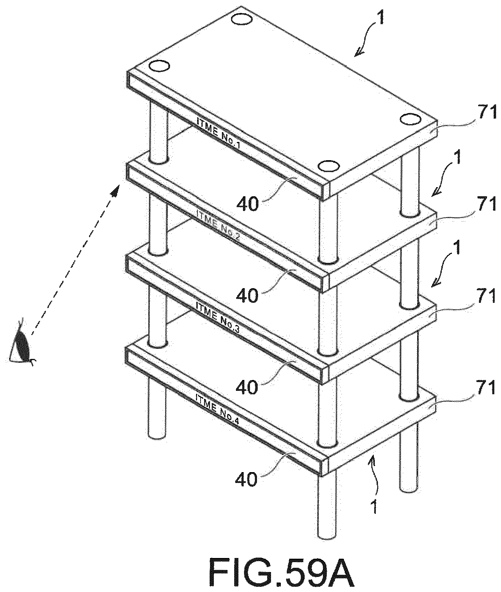

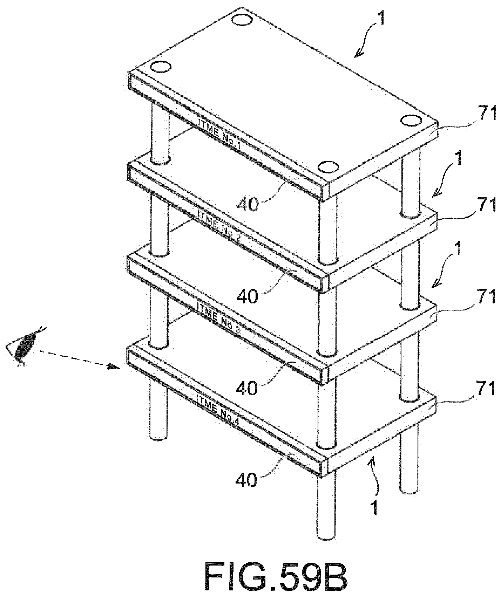

Fig. 58 illustrates an example in which a plurality of the display devices 10 including the housing 71 illustrated in Fig. 39 are arranged in parallel in a vertical direction. For example, the display devices 10 illustrated in Fig. 58 can be used as a shelf on which various objects are placed. In a case where the plurality of display devices 10 are arranged in a vertical direction, it is necessary for a visual line of an observer to face an obliquely upward side to visually recognize the screen 40 of a display device 10 on an upper side as illustrated in Fig. 59A. In addition, it is necessary for the visual line to face an obliquely downward side to visually recognize the screen 40 of a display device 10 on a lower side as illustrated in Fig. 59B.

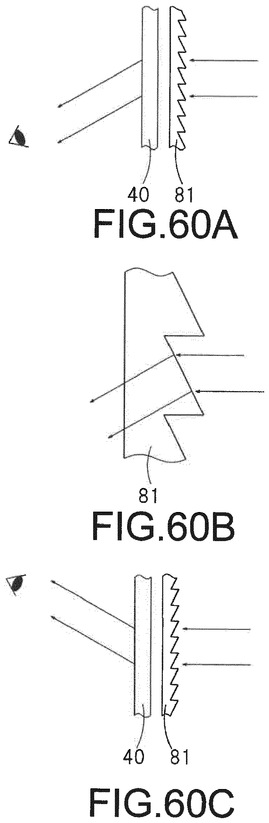

In any of the cases illustrated in Fig. 59A and Fig. 59B, the screen 40 is viewed from an oblique direction, and thus in a case where a visual field angle of the screen 40 is narrow, visibility may deteriorate. Here, as illustrated in Fig. 60A, a lens sheet 81 may be disposed in front of the screen 40, that is, on a further projector 20 side in comparison to the screen 40, a propagation direction of coherent light emitted from the projector 20 may be changed by the lens sheet 81, and the coherent light may be incident to the screen 40 along an oblique direction from a normal direction of a projection surface of the screen 40. Accordingly, when a visual line of an observer faces in a direction indicated by a broken arrow in Fig. 59A, the observer can visually recognize a projection image of the screen 40 in a clear state. Fig. 60A illustrates an example in which the visual line of the observer faces an obliquely upward side, and it is possible to improve visibility in a case of viewing the screen 40 of the display device 10 on an upper side among the plurality of display devices 10 which are vertically arranged in parallel.

Fig. 60B is an enlarged view in a case where a prism sheet is used as the lens sheet 81. Light incident to the prism sheet is diffracted on an inclined plane, and is incident to the screen 40. Fig. 60C illustrates an example in which a visual line faces an obliquely upward side, and it is possible to improve visibility in a case of viewing the screen 40 of the display device 10 on a lower side among the plurality of display devices 10 which are vertically arranged in parallel.

As described above, with regard to the display device 10 that is disposed on an upward side or a downward side in comparison to the height of eyes of an observer, the lens sheet 81 such as a prism sheet is mounted to the screen 40 to change a propagation direction of a projection light from the projector 20, thereby improving visibility of the screen 40.

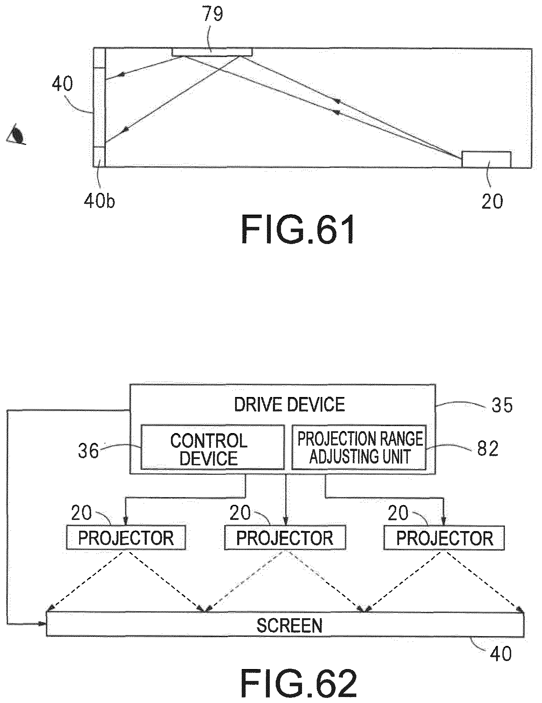

Furthermore, as a specific optical configuration in which light from the projector 20 is incident from a direction that is inclined to a normal direction of a projection surface of the screen 40, a configuration other than the case of using the lens sheet 81 as illustrated in Fig. 60A or Fig. 60C is also considered. For example, Fig. 61 illustrates an example in which coherent light emitted from the projector 20 disposed on the bottom surface of the housing 71 is reflected by the reflection mirror 79 that is disposed on an upper surface of the housing 71, and the coherent light is obliquely incident to the screen 40. As a modification example of Fig. 61, the projector 20 may be disposed on an upper surface of the housing 71, and the reflection mirror 79 may be disposed on a lower surface of the housing 71.

### (Adjustment of Projection Position of Screen 40)

As illustrated in Fig. 46, in a case where the plurality of projectors 20 are disposed on the lower surface of the housing 71, and coherent light emitted from the projectors 20 is projected to one screen 40, there is a concern that an upper and lower position of a projection image of the screen 40 may deviate for every projector 20 due to an individual difference of the projectors 20. Particularly, in a case where the display device 10 illustrated in Fig. 39 is used under a low-temperature environment such as a refrigerator and a freezer, the deviation of the projection position of the screen 40 in each of the projectors 20 in an upper and lower direction increases. In addition, in a case where the housing 71 illustrated in Fig. 35 is used under a high-temperature environment such as a sauna, the deviation also increases. One of causes for occurrence of the deviation is a slight variation of a propagation direction or a beam diameter of light emitted from the projector 20 due to a temperature.

Fig. 62 is a view illustrating a configuration of the display device 10 having a projection range adjustment function regarding to the screen 40. The display device 10 illustrated in Fig. 62 includes the screen 40, a control device 35 including a projection range adjusting unit 82, and a plurality of projectors 20. The screen 40 may be the screen 40 having a speckle reducing function as illustrated in Fig. 12A to Fig. 15, or a screen 40 that does not have the speckle reducing function. In a case of the display device 10 including the screen 40 having the speckle reducing function, the drive device 36 supplies a voltage or a current to the screen 40. In the screen 40 that does not have the speckle reducing function, the drive device 36 may be omitted.

In Fig. 62, three projectors 20 are provided, but the number of the projectors 20 is not limited as long as two or more projectors are provided. The projectors 20 illustrated in Fig. 62 are disposed on the same surface. For example, the projectors 20 illustrated in Fig. 62 are disposed on the bottom surface of the housing 71 to be separated from each other as illustrated in Fig. 56(b). The projectors 20 illustrated in Fig. 16 are manufactured in the same hardware specification, and the projectors 20 originally have the same outer size. Therefore, the same optical characteristics will be exhibited. However, a propagation direction of projection light emitted from each of the projectors 20 slightly deviates due to an individual difference of the projectors 20.

The control device 35 includes a drive device 36, and the projection range adjusting unit 82 is provided in the control device 35. Furthermore, the control device 35 including the projection range adjusting unit 82 may be provided separately from the drive device 36.

The projection range adjusting unit 82 adjusts a projection range on the screen 40 with light emitted from the plurality of projectors 20 for every projector 20. That is, the projection range adjusting unit 82 adjusts the projection range for every projector 20 so that the deviation of the projection range in at least one of a horizontal direction and a vertical direction on the screen 40 with light emitted from each of the projectors 20 is reduced.

As described above, even when the plurality of projectors 20 having originally the same optical characteristics are disposed on the same surface, there is a concern that the deviation of the projection range to the screen 40 occurs due to an individual difference of the projectors 20 or an environment condition such as a temperature. The deviation of the projection range in a right and left direction of the screen 40 can be reduced by minutely adjusting a disposition location of each of the projectors 20, but it is not easy to reduce the deviation of the projection range in an upper and lower direction of the screen 40.

Here, the projection range adjusting unit 82 examines the projection range on the screen 40 of each of the projectors 20 under an actual use environment of the display device 10 in advance, and adjusts the projection range for every projector 20 so that the deviation of the projection range of each of the projectors 20 is reduced.

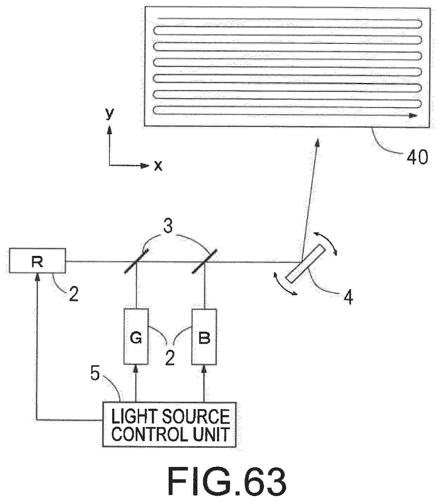

Fig. 63 is a block diagram illustrating an inner configuration of each of the projectors 20. The projector 20 illustrated in Fig. 63 includes a plurality of light sources 2, a dichroic mirror 3, a scanning member 4, and a lighting control unit 5.

The plurality of light sources 2 emit a plurality of beams of light which are different in a wavelength region. In a specific example, the plurality of light sources 2 include a light source 2 that emits coherent light of red (R), a light source 2 that emits coherent light of green (G), and a light source 2 that emits coherent light of blue (B).

The dichroic mirror 3 is provided to synthesize the plurality of beams of light from the light sources 2. In the example illustrated in Fig. 63, two dichroic mirrors 3 are disposed in conformity to positions of the light source 2 for green and the light source 2 for blue on an optical axis of the light source 2 that emits red coherent light. Synthesis light that is synthesized by the dichroic mirrors 3 is incident to the scanning member 4. Furthermore, arrangement of the light sources 2 and the dichroic mirrors 3 is not limited to the arrangement illustrated in Fig. 63.

For example, the scanning member 4 is a MEMS mirror having rotation axes (not illustrated) which can rotate in biaxial directions, and the synthesis light is reflected by the MEMS mirror and is used to scan the screen 40.

The lighting control unit 5 controls an emission timing of light emitted from each of the light sources in correspondence with a control signal from the projection range adjusting unit 82. In addition, in a case where a deviation occurs in a projection range on the screen 40 for every light source, this becomes a cause for occurrence of a color shift, and thus the lighting control unit 5 may control the emission timing of light that is emitted from each of the light sources to suppress the color shift in correspondence with the control signal from the projection range adjusting unit 82.

Light emitted from the projector 20 moves on the screen 40, for example, along a direction indicated by an arrow in Fig. 63 through optical scanning by the scanning member 4. In a case where a deviation occurs in a projection range of the screen 40 in an upper and lower direction for every projector 20, a projection range that is a movement range of the arrow in Fig. 63 may be set to be broader in the upper and lower direction, and the lighting control unit of the projector 20 may be controlled in correspondence with a deviation amount of the projection range of each of the projectors 20. That is, an actual initiation timing of scanning with light on the screen 40 may be adjusted for every projector 20.

The projection range adjusting unit 82 illustrated in Fig. 62 transmits a control signal to the lighting control unit 5 for every projector 20, and controls a light emission timing from a light source, thereby adjusting a projection range on the screen 40 for every projector 20. Accordingly, even in a case of projecting a continuous image on one screen 40 by using a plurality of the projectors 20, an unevenness or a gap does not occur at a boundary position of projection images formed by the plurality of projectors 20, and thus it is possible to project a natural image without uncomfortable feeling.

The aspects of the present disclosure are not limited to the individual embodiments, and include various modifications which are conceivable by those skilled in the art, and the effects of the present disclosure are not limited to the above-described content. That is, various additions, modifications, and partial deletions can be made in a range not departing from the conceptual sprit and gist of the present disclosure which are derived from the content defined in the appended claims and equivalents thereof.

### Reference Signs List

- 2: LIGHT SOURCE
- 3: DICHROIC MIRROR
- 4: SCANNING MEMBER
- 5: LIGHTING CONTROL UNIT
- 10: DISPLAY DEVICE
- 11: SUPPORT TOOL
- 12: CEILING SURFACE
- 14: SCANNING DEVICE
- 15: LIGHT SOURCE CONTROL UNIT
- 20: PROJECTOR
- 21: COHERENT LIGHT SOURCE
- 30: POWER SOURCE
- 35: CONTROL DEVICE
- 36: DRIVE DEVICE
- 40: SCREEN
- 40a: SHEET MEMBER
- 40b: EDGE PORTION
- 41: FIRST ELECTRODE
- 42: SECOND ELECTRODE
- 46: FIRST COVER LAYER
- 47: SECOND COVER LAYER
- 50: PARTICLE SHEET
- 51, 52: BASE MATERIAL
- 55: PARTICLE LAYER
- 56: SUPPORT PORTION
- 60: PARTICLE
- 61: FIRST PORTION
- 62: SECOND PORTION
- 66b, 67b: DIFFUSION COMPONENT
- 71: HOUSING
- 72: REFLECTION MIRROR
- 73: LIGHT PROPAGATION DIRECTION CHANGING MEMBER
- 74: CONCAVE MIRROR
- 75: CONVEX MIRROR
- 76: OPTICAL SYSTEM
- 76a: FIRST CYLINDRICAL LENS
- 76b: SECOND CYLINDRICAL LENS
- 77: FRESNEL LENS
- 78: PRISM
- 79: REFLECTION MIRROR
- 81: LENS SHEET
- 82: PROJECTION RANGE ADJUSTING UNIT

## Claims

1. A screen comprising:
a sheet member comprising a control layer that comprises a plurality of particles or a predetermined liquid, and an electrode that applies a voltage to the control layer to drive the plurality of particles or the predetermined liquid,
wherein the plurality of particles or the predetermined liquid allows light emitted from a light source disposed at a predetermined site to be transmitted or reflected, and
the electrode causes at least one of movement and rotation of the plurality of particles to occur at the inside of the control layer in correspondence with the voltage, or causes the predetermined liquid to move at the inside of the control layer in correspondence with the voltage.

2. The screen according to claim 1, wherein the sheet member is supported to a predetermined surface that is disposed to be separated from the sheet member by a support tool.

3. The screen according to claim 2, wherein a sheet surface of the sheet member is disposed to face the predetermined surface.

4. The screen according to claim 2, wherein a sheet surface of the sheet member is disposed in a direction that intersects the predetermined surface.

5. The screen according to claim 1, wherein a sheet surface of the sheet member is in surface contact with the predetermined surface.

6. The screen according to claim 1,
wherein the sheet member is disposed on the predetermined surface in a state in which a sheet surface is curved, and
at least a part of an end of the sheet member is in contact with the predetermined surface.

7. The screen according to any one of claims 2 to 6, wherein the predetermined surface is a ceiling surface.

8. The screen according to any one of claims 2 to 6, wherein the predetermined surface is a surface that is disposed in a direction different from a direction of a ceiling surface.

9. The screen according to any one of claims 1 to 8, wherein a sheet surface of the sheet member is a flat surface.

10. The screen according to any one of claims 1 to 8, wherein a sheet surface of the sheet member is a curved surface.

11. The screen according to any one of claims 1 to 10, further comprising:
a plurality of the sheet members disposed to come into close contact with each other, each of the sheet members comprising the control layer and the electrode,
wherein ends of two sheet members disposed adjacent to each other among the plurality of sheet members are joined to be flush with each other.

12. A display device comprising:
the screen according to any one of claims 1 to 11;
a support tool of which one end is connected to one or more sites of the sheet member and the other end is connected to a predetermined surface disposed to be separated from the sheet member, and which supports the sheet member at the predetermined surface; and
a light source that irradiates the screen with coherent light.

13. The display device according to claim 12, wherein the light source is disposed along the predetermined surface.

14. The display device according to claim 13, wherein the light source is disposed in a range of a normal direction within a sheet surface of the sheet member.

15. The display device according to claim 13, wherein the light source is disposed at a position that deviates from a range of a normal direction within a sheet surface of the sheet member.

16. The display device according to any one of claims 12 to 15, further comprising: a light source control unit that scans a region within a sheet surface of the sheet member with coherent light that is emitted from the light source.

17. The screen according to claim 1,
wherein the sheet member is disposed on a predetermined reference surface, and
the light source is disposed on the reference surface.

18. The screen according to claim 1 or 17, wherein the sheet member is disposed to surround at least a part of the light source.

19. The screen according to claim 18,
wherein the sheet member is a hollow spherical body, and
the light source is disposed at the inside of the spherical body.

20. The screen according to claim 19, wherein the spherical body is obtained by joining ends of two sheet members disposed adjacent to each other among a plurality of the sheet members disposed to come into close contact with each other to be flush with each other.

21. The screen according to claim 18,
wherein the sheet member is a hollow cylindrical body, and
the light source is disposed at the inside of the cylindrical body.

22. The screen according to claim 21, wherein the cylindrical body is obtained by curving the sheet member and joining both opposite ends to be flush with each other, or by joining ends of two sheet members disposed adjacent to each other among a plurality of the sheet members disposed to come into close contact with each other to be flush with each other.

23. A display device comprising:
the screen according to any one of claims 17 to 22; and
a light source that emits coherent light.

24. A display device comprising:
a sheet member comprising a control layer that comprises a plurality of particles or a predetermined liquid, and an electrode that applies a voltage to the control layer to drive the plurality of particles or the predetermined liquid;
a drive unit that generates a driving force that causes the sheet member to float in a three-dimensional space;
a support tool of which one end is connected to one or more sites of the sheet member and the other end is connected to the drive unit, and which supports the sheet member to the drive unit; and
a light source that is disposed along the drive unit,
wherein the plurality of particles or the predetermined liquid allows light emitted from the light source to be transmitted or reflected, and
the electrode causes at least one of movement and rotation of the plurality of particles to occur at the inside of the control layer in correspondence with the voltage, or causes the predetermined liquid to move at the inside of the control layer in correspondence with the voltage.

25. The display device according to claim 24, wherein a sheet surface of the sheet member is a flat surface.

26. The display device according to claim 24, wherein a sheet surface of the sheet member is a curved surface.

27. The display device according to any one of claims 24 to 26, further comprising:
a plurality of the sheet members disposed to come into close contact with each other, each of the sheet members comprising the control layer and the electrode,
wherein ends of two sheet members disposed adjacent to each other among the plurality of sheet members are joined to be flush with each other.

28. A display device comprising:
a plurality of sheet members which are disposed to come into close contact, each of the sheet members comprising a control layer that comprises a plurality of particles or a predetermined liquid, and an electrode that applies a voltage to the control layer to drive the plurality of particles or the predetermined liquid;
a light source that irradiates the plurality of sheet members with coherent light; and
a light source control unit that scans each sheet surface of the plurality of sheet members with the coherent light from the light source,
wherein ends of two sheet members disposed adjacent to each other among the plurality of sheet members are joined to be flush with each other, and
the light source control unit performs scanning with the coherent light so that a joint of the two sheet members disposed adjacent to each other is not irradiated with the coherent light from the light source.

29. A display device comprising:
a sheet member comprising a control layer that comprises a plurality of particles or a predetermined liquid, and an electrode that applies a voltage to the control layer to drive the plurality of particles or the predetermined liquid; and
a plurality of light sources which respectively irradiate corresponding partial regions on a sheet surface of the sheet member with coherent light,
wherein two partial regions, which are disposed adjacent to each other among a plurality of the partial regions irradiated with the coherent light from the plurality of light sources, partially overlap each other.

30. The display device according to claim 29, further comprising: a light source control unit that adjusts light intensity of the coherent light of the plurality of light sources which is used to irradiate an overlapping region of the two partial regions disposed adjacent to each other.

31. The screen according to any one of claims 1 to 11, and 17 to 22, wherein each of the plurality of particles comprises a first portion and a second portion.

32. The screen according to any one of claims 1 to 11, and 17 to 22,
wherein the plurality of particles have a charging property, and
the electrode forms an electric field that causes the plurality of particles to move.

33. The screen according to any one of claims 1 to 11, and 17 to 22, further comprising:
a plurality of partition wall portions, each of the plurality of partition wall portions accommodating the plurality of particles,
wherein each of the plurality of partition wall portions comprises,
a first liquid that has conductivity or polarity,
a second liquid that is disposed to come into contact with the first liquid, and corresponds to the predetermined liquid that is immiscible with the first liquid,
an electrical insulating layer that is disposed to come into contact with the second liquid, and
an electrode that causes a contact angle of the second liquid on the electrical insulating layer to vary in response to a voltage that is applied to the second liquid.

34. The display device according to any one of claims 12 to 16, and 23 to 30, further comprising:
a projector that comprises the light source,
wherein the light source emits image coherent light that is generated in the projector.

35. A display device comprising:
a sheet-shaped screen comprising a control layer that comprises a plurality of particles or a predetermined liquid, and an electrode that applies a voltage to the control layer to drive the plurality of particles or the predetermined liquid;
a drive device that drives the electrode;
a projection device that projects coherent light to the screen; and
a housing that accommodates at least the projection device,
wherein the projection device comprises,
a light source that emits the coherent light, and
a scanning device that scans the screen with the coherent light that is emitted from the light source, and
the screen is disposed at least at a part of an outer surface of the housing.

36. The display device according to claim 35, further comprising: a light propagation direction changing member that is accommodated in the housing, and guides the coherent light output from the projection device to the screen by changing a propagation direction of the coherent light.

37. The display device according to claim 36, wherein the light source and the scanning device are disposed at a location that does not block an optical path of the coherent light that propagates toward the screen from the light propagation direction changing member.

38. The display device according to claim 36 or 37, wherein the light propagation direction changing member is a reflection mirror or a prism.

39. The display device according to any one of claims 36 to 38, wherein the light propagation direction changing member guides the coherent light to the screen by changing the propagation direction of the coherent light one or more times, and an optical path length of light that is incident to the screen at a shortest distance in the coherent light emitted from the projection device is longer than an inner dimension length of a depth of the housing.

40. The display device according to any one of claims 36 to 39, wherein the light propagation direction changing member causes the coherent light to be incident to the screen along a direction that is inclined with respect to a normal direction of a projection surface of the screen.

41. The display device according to any one of claims 36 to 40, wherein the housing is curved or bent in correspondence with an incidence direction and an emission direction of the coherent light in the light propagation direction changing member.

42. The display device according to any one of claims 35 to 41, further comprising: an optical system that is accommodated in the housing, and controls a diffusion range of the coherent light output from the projection device.

43. The display device according to claim 42, wherein the optical system comprises a plurality of lenses which are disposed to be separated from each other in an optical axis direction.

44. The display device according to any one of claims 35 to 43,
wherein the projection device comprises a plurality of projection units which project the coherent light to respective different regions of the screen, and
each of the plurality of projection units comprises the light source and the scanning device.

45. The display device according to claim 44, further comprising: a parallelizing optical system that is disposed on an incidence surface side of the screen, and parallelizes a plurality of beams of coherent light output from the projection device.

46. The display device according to any one of claims 35 to 45, further comprising: a projection range adjusting unit that adjusts a projection range on the screen with the coherent light emitted from the plurality of projection units for each of the plurality of projection units.

47. The display device according to claim 46, wherein the projection range adjusting unit adjusts the projection range for each of the plurality of projection units so that a deviation of the projection range in at least one of a horizontal direction and a vertical direction on the screen with the coherent light emitted from the plurality of projection units is reduced.

48. The display device according to claim 46 or 47, wherein the projection range adjusting unit adjusts the projection range for each of the plurality of projection units in correspondence with an ambient temperature of the housing.

49. The display device according to any one of claims 35 to 43,
wherein the screen comprises a plurality of screen units which are disposed at locations different from each other on the outer surface of the housing, and
the projection device comprises a plurality of projection units, each irradiating a corresponding screen unit among the plurality of screen units with coherent light.

50. The display device according to claim 49, wherein each of the plurality of projection units is disposed at a location different from an optical path of the coherent light output from a different projection unit in the plurality of projection units.

51. The display device according to any one of claims 35 to 43, wherein the projection device is deposed in a state of being biased with respect to a disposition location of the screen.

52. The display device according to any one of claims 35 to 43, further comprising: a plurality of the screens, which are arranged in different plane directions of the outer surface of the housing, wherein the projection device scans the plurality of screens with the coherent light.

53. The display device according to any one of claims 35 to 44,
wherein the screen comprises a bent surface or a curved surface, and
the bent surface or the curved surface is projected by one or a plurality of the projection devices.

54. The display device according to any one of claims 35 to 53, wherein the projection device is disposed at a position that is hidden from a projection region of the screen when the screen is viewed from a front direction.

55. The display device according to claim 54, wherein the projection device is disposed at a position that overlaps an edge portion of the screen when the screen is viewed from the front direction.
